(19) Europäisches Patentamt
European Patent Office
Office européen des brevets

(11) EP 0 710 663 A1

# (12) EUROPEAN PATENT APPLICATION

(43) Date of publication:
**08.05.1996 Bulletin 1996/19**

(21) Application number: **95116991.1**

(22) Date of filing: **27.10.1995**

(51) Int. Cl.$^6$: **C07F 5/02**, C07F 17/00, C08F 4/00, C08F 210/00, C08F 10/00

(84) Designated Contracting States:
**BE DE FR GB IT NL**

(30) Priority: **01.11.1994 JP 269012/94**
**24.11.1994 JP 289998/94**

(71) Applicant: **Japan Polyolefins Co., Ltd.**
**Tokyo, 105 (JP)**

(72) Inventors:
- **Ono, Michio,**
  **c/o Oita Research Center**
  **Oita-shi, Oita, 870-01 (JP)**
- **Hinokuma, Shinji,**
  **c/o Oita Research Center**
  **Oita-shi, Oita, 870-01 (JP)**
- **Miyake, Shigenobu,**
  **c/o Oita Research Center**
  **Oita-shi, Oita, 870-01 (JP)**
- **Inazawa, Shintaro,**
  **c/o Oita Research Center**
  **Oita-shi, Oita, 870-01 (JP)**

(74) Representative: **Strehl Schübel-Hopf Groening & Partner**
**Maximilianstrasse 54**
**80538 München (DE)**

## (54) Boron-containing compound, its polymer, catalyst comprising the polymer and metallocene compound, and process for producing polyolefin

(57) A boron-containing compound of the formula (1):

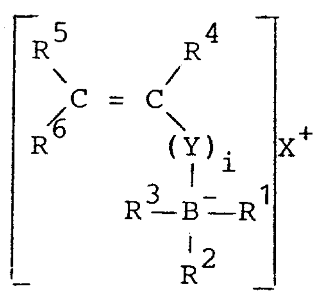

(1)

wherein $R^1$ through $R^6$ are substituents as defined in the body of the specification, Y is a hydrocarbon group, i = 0 or 1, and $X^+$ is a univalent cation; and a polymer of the compound (1). The polymer of the compound (1) is used in combination with a metalocene compound, as a catalyst system for polymerization of an olefin.

EP 0 710 663 A1

## Description

This invention relates to (i) a polymerizable boron-containing compound, (ii) a homopolymer or copolymer of the boron-containing compound, (iii) a catalyst system for the polymerization of an olefin, comprising a homopolymer or a copolymer of the boron-containing compound, and a metallocene compound, and (iv) a process for polymerizing an olefin in the presence of the catalyst system.

Metallocene compounds are used as a catalyst for the polymerization of an olefin, which do not exhibit a catalytic activity when used alone, and therefore, which are used in combination with a cocatalyst. A typical example of the cocatalyst is methylaluminoxane. A catalyst combination composed of a metallocene compound and a large excess of methylaluminoxane is characterized as exhibiting an enhanced polymerization activity per unit weight of the metallocene compound. But, the catalytic activity is not high per unit weight of the methylaluminoxane.

A tetrakis(pentafluorophenyl)borate cocatalyst exhibits an enhanced catalytic activity when it is used in an amount equimolar to or twice larger than that of a metallocene compound (Japanese Unexamined Patent Publication No. 3-207703 and 3-207704). The catalytic activity of this catalyst combination is high per unit weight of the cocatalyst. However, the catalyst combination of a metallocene compound with a tetrakis(pentafluorophenyl)borate cocatalyst is soluble in a hydrocarbon solvent, and therefore, a problem arises such that a polymer is undesirably adhered onto an inner wall of a polymerization reactor in a slurry process or a vapor phase process.

To solve the adhesion of polymer, an attempt has been made wherein the tetrakis(pentafluorophenyl)borate cocatalyst is used in the state of being supported on a solid carrier such as silica or alumina (Japanese Unexamined Patent Publication No. 5-155926 and 3-234709). For example, it has been proposed in Japanese Unexamined Patent Publication No. 5-155926 that a triphenylcarbonium tetrakis(pentafluorophenyl)borate cocatalyst is stirred together with silica in a hydrocarbon solvent to provide the cocatalyst supported on silica. However, it is still impossible to completely avoid the undesirable adhesion of polymer by the proposed method, and the use of the solid support reduces the catalytic activity per unit weight of the metallocene compound. Therefore, it is eagerly desired to provide a catalyst which does not cause a polymer adhesion onto a polymerization rector and exhibits a high polymerization activity.

In view of the foregoing, a primary object of the present invention is to provide a catalyst system comprising a metallocene compound as a catalyst and a boron-containing polymer as a cocatalyst for the polymerization of an olefin, which exhibits an enhanced catalytic activity and does not cause undesirable adhesion of polymer onto an inner wall of a polymerization reactor in a slurry process or a vapor phase process.

Another object is to provide a boron-containing polymer which is used as a cocatalyst in combination with a metallocene compound as a catalyst for the provision of the above-mentioned catalyst system for polymerization of an olefin.

Still another object is to provide a boron-containing polymerizable compound used for the preparation of the above-mentioned cocatalyst.

A further object is to provide a process for polymerizing an olefin by using the above-mentioned catalyst system.

In one aspect of the present invention, there is provided a boron-containing compound represented by the following formula (1):

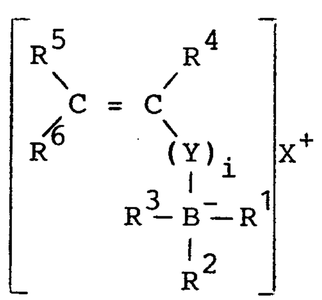

(1)

wherein B represents a boron atom;

C represents a carbon atom;

$R^1$, $R^2$ and $R^3$ independently represent a hydrogen atom; a halogen atom; an alkyl, halogen-containing alkyl or silicon-containing alkyl group having 1 to 20 carbon atoms; an arylalkyl, halogen-containing arylalkyl or a silicon-containing arylalkyl group having 7 to 20 carbon atoms; an aryl, halogen-containing aryl or silicon-containing aryl group having 6 to 20 carbon atoms; or an alkylaryl, halogen-containing alkylaryl or silicon-containing alkylaryl group having 7 to 20 carbon atoms;

$R^4$, $R^5$ and $R^6$ independently represent a hydrogen atom, an alkyl group having 1 to 10 carbon atoms, an arylalkyl

group having 7 to 10 carbon atoms, an aryl group having 6 to 10 carbon atoms or an alkylaryl group having 7 to 10 carbon atoms;

Y represents an alkylene or halogen-containing alkylene group having 1 to 10 carbon atoms, an arylalkylene or halogen-containing arylalkylene group having 7 to 10 carbon atoms, an arylene or halogen-containing arylene group having 6 to 10 carbon atoms, an alkylarylene or halogen-containing alkylarylene group having 7 to 10 carbon atoms, or an alkylsilylene group having 1 to 10 carbon atoms;

i is 0 or 1; and

$X^+$ is a cation selected from the group consisting of carbonium, ammonium, ferrocenium, phosphonium, sodium, potassium and lithium cations.

In another aspect of the present invention, there is provided a boron-containing polymer comprising recurring units represented by the following formula (3):

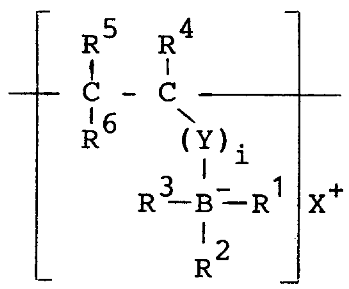

(3)

and optional recurring units represented by the following formula (4):

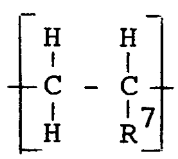

(4)

wherein B, C, $R^1$, $R^2$, $R^3$, $R^4$, $R^5$, $R^6$, Y, $X^+$ and i are as defined above, and $R^7$ represents a hydrogen atom, a halogen atom, an alkyl group having 1 to 20 carbon atoms, an alkenyl group having 2 to 20 carbon atoms, an aryl or halogen-containing aryl group having 6 to 20 carbon atoms, an alkylaryl group having 7 to 20 carbon atoms, an arylalkenyl group having 8 to 20 carbon atoms, an alkylsilyl group having 1 to 20 carbon atoms, an arylsilyl group having 6 to 20 carbon atoms or an alkoxysilyl group having 1 to 20 carbon atoms;

said polymer being prepared by polymerization of a monomer represented by the above-mentioned formula (1) or by copolymerization of the monomer of formula (1) with a monomer represented by the following formula (2):

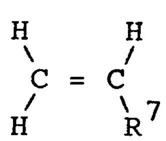

(2)

wherein B, C, $R^1$, $R^2$, $R^3$, $R^4$, $R^5$, $R^6$, Y, $X^+$, $R^7$ and i are as defined above.

In still another object of the present invention, there is provided a catalyst system for polymerization of an olefin which comprises (a) the above-mentioned boron-containing polymer and (b) a metallocene compound selected from the group consisting of those which are represented by the following formulae (5) and (6):

$$[(\eta_5\text{-}C_5R^8{}_h)_pR^{10}{}_s(\eta_5\text{-}C_5R^9{}_j)]MeQ_{3\text{-}p} \qquad (5)$$

$$[(R^9N)_pR^{10}{}_s(\eta_5\text{-}C_5R^8{}_h)]MeQ'_{3\text{-}p} \qquad (6)$$

wherein N is a nitrogen atom,

Me is a transition metal selected from those which are recited in groups 4 and 5 of the periodic table,

$(\eta_5\text{-}C_5R^8{}_h)_p$ and $(\eta_5\text{-}C_5R^9{}_j)$ are a cyclopentadienyl ring or a substituted cyclopentadienyl ring, where h and j are an integer of 2 to 5, and $R^8$s and $R^9$s independently represent a hydrogen atom, an alkyl or alkenyl group having 1 to 20 carbon atoms, an aryl group having 6 to 20 carbon atoms, an alkylaryl or arylalkyl group having 7 to 20 carbon atoms or an alkylsilyl or silylalkyl group having 1 to 20 carbon atoms, or two adjacent $R^8$s or $R^9$s may form a ring together with the two adjacent carbon atoms in the substituted cyclopentadienyl ring,

$R^{10}$ is a binding group selected from the group consisting of an alkylene group having 1 to 4 carbon atoms, a dialkylgermylene group having 1 to 4 carbon atoms in each alkyl group, and an alkylsilylene group having 1 to 4 carbon atoms; said binding group having a function of binding the $(\eta_5\text{-}C_5R^8{}_h)_p$ ring with the $(\eta_5\text{-}C_5R^9{}_j)$ ring in the metallocene compound of formula (5) or binding the $(\eta_5\text{-}C_5R^8{}_h)_p$ ring with the $(R^9N)_p$ in the metallocene compound of formula (6),

Q and Q' are a hydrogen atom, a halogen atom a hydrocarbon group having 1 to 20 carbon atoms,

s is 0 or 1,

p is 0 or 1, provided that, when s is 0, p is 0, and

each of h and j is 4 when s is 1, and is 5 when s is 0.

In a further aspect of the present invention, there is provided a process for producing a polyolefin which comprises polymerizing an olefin having 2 to 20 carbon atoms in the presence of the above-mentioned catalyst.

The attached drawings show NMR spectra and infrared absorption spectrum of boron-containing compounds and polymers thereof in accordance with the present invention.

Figure 1 is a $^1$H-NMR spectrum of poly(trimethylammonium trispentafluorophenyl-4-vinylphenylborate-co-styrene) (prepared in Example 4) as obtained in a dichloromethane-$d_2$ at 30°C;

Fig. 2 is a $^{19}$F-NMR spectrum of poly(trimethylammonium trispentafluorophenyl-4-vinylphenylborate-co-styrene) (prepared in Example 4) as obtained in a dichloromethane-$d_2$ at 30°C;

Fig. 3 is a $^{19}$F-NMR spectrum of trimethylammonium trispentafluorophenyl-4-vinylphenylborate (prepared in Example 1) as obtained in a dichloromethane-$d_2$ at 30°C;

Fig. 4 is a $^{11}$B-NMR spectrum of poly(trimethylammonium trispentafluorophenyl-4-vinylphenylborate-co-styrene) (prepared in Example 1) as obtained in a dichloromethane-$d_2$ at 30°C;

Fig. 5 is a $^{11}$B-NMR spectrum of trimethylammonium trispentafluorophenyl-4-vinylphenylborate (prepared in Example 1) as obtained in a dichloromethane-$d_2$ at 30°C; and

Fig. 6 is an infrared absorption spectrum of poly(trimethylammonium trispentafluorophenyl-4-vinylphenylborate-co-styrene) (prepared in Example 4) as obtained by the KBr tablet method.

The definition and the nomenclature for high-molecular-weight compounds used in this specification and the appended claims are according to "Compendium of Macromolecular Nomenclature" published by McGraw-Hill.

In the following formula (1) representing the boron-containing compound of the present invention:

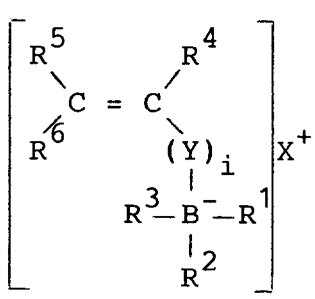

(1)

B represents a boron atom;

C represents a carbon atom;

$R^1$, $R^2$ and $R^3$ may be the same or different and represent a hydrogen atom, a halogen atom which includes, for example, fluorine, chlorine and bromine; an alkyl group having 1 to 20 carbon atoms such as methyl, ethyl, n-propyl, 1-methylethyl, n-butyl or 2-methylpropyl, a halogen-containing alkyl group having 1 to 20 carbon atoms such as trifluoromethyl,trifluoromethylethyl or pentafluoroethyl, a silicon-containing alkyl group having 1 to 20 carbon atoms such as trimethylsilyl or 2-trimethylethylsilyl, an arylalkyl group having 7 to 20 carbon atoms such as benzyl or 2-phenylethyl, a halogen-containing arylalkyl group having 7 to 20 carbon atoms such as pentafluorophenylmethyl or 1-(3,5-bis[trifluoromethyl]phenyl)methyl, a silicon-containing arylalkyl group having 7 to 20 carbon atoms such as trimethylsilylphenylmethyl or 3,5-bis(trimethylsilyl)phenylmethyl, an aryl group having 1 to 20 carbon atoms such as phenyl or naphthyl, a halogen-containing aryl group having 1 to 20 carbon atoms such as 4-fluorophenyl or pentafluorophenyl, a silicon-containing aryl group having 6 to 20 carbon atoms such as 4-trifluorosilylphenyl, an alkylaryl group having 7 to 20 carbon atoms such as 4-methylphenyl, 3,5-dimethylphenyl or 2,4,6-trimethylphenyl, a halogen-containing alkylaryl group having 7 to 20 carbon atoms such as 4-trifluoromethylphenyl, 3,5-bis(trifluoromethyl)phenyl or 2,4,6-tris-(trifluoromethyl)phenyl, a silicon-containing alkylaryl group having 7 to 20 carbon atoms such as 4-trimethylsilylphenyl or 3,5-bis(trimethylsilyl)phenyl;

$R^4$, $R^5$ and $R^6$ may be the same or different and represent a hydrogen atom, an alkyl group having 1 to 10 carbon atoms such as methyl, ethyl, n-propyl, 1-methylethyl, n-butyl or 2-methylpropyl, an arylalkyl group having 7 to 10 carbon atoms such as benzyl or 2-phenylethyl, an aryl group having 6 to 10 carbon atoms such as phenyl or pentaflurophenyl, or an alkylaryl group having 7 to 10 carbon atoms such as 4-methylphenyl or 3,5-dimethylphenyl;

Y represents an alkylene group having 1 to 10 carbon atoms such as methylene, ethylene, propylene or butylene, a halogen-containing alkylene group having 1 to 10 carbon atoms such as difluoromethylene, bis(trifluoromethyl)methylene ortetrafluoroethylene, an arylalkylene group having 7 to 10 carbon atoms such as phenylmethylene, 2-phenylethylene or 2-phenylpropylene, a halogen-containing arylalkylene group having 7 to 10 carbon atoms such as pentafluorophenylmethylene or bis(pentafluorophenyl)methylene, an arylene group having 6 to 10 carbon atoms such as o-phenylene, m-phenylene or p-phenylene, a halogen-containing arylene group having 6 to 10 carbon atoms such as 2-fluoro-p-phenylene, an alkylarylene group having 7 to 10 carbon atoms such as 2-methyl-p-phenylene, 2,6-dimethyl-p-phenylene or 2,3,5,6-tetramethyl-p-phenylene, a halogen-containing alkylarylene group having 7 to 10 carbon atoms such as 2-trifluoromethyl-p-phenylene, or an alkylsilylene group having 1 to 10 carbon atoms such as dimethylsilylene or ethylsilylmethylene;

i is 0 or 1; and

$X^+$ is a monovalent cation selected from the group consisting of carbonium, ammonium, ferrocenium, phosphonium, sodium, potassium and lithium cations.

As specific examples of the boron-containing compound of formula (1), there can be mentioned N,N-dimethylanilinium triphenyl-4-(1-methyl-1-ethynyl)phenylborate, N,N-dimethylanilinium triphenyl-4-(1-phethyl-1-ethynyl)phenylborate, N,N-dimethylanilinium triphenyl-4-(2-phethyl-1-ethynyl)phenylborate, N,N-dimethylanilinium triphenyl-4-(1-propenyl)phenylborate, N,N-dimethylanilinium triphenyl-4-(1-methyl-1-propenyl)phenylborate, N,N-dimethylanilinium triphenyl-4-(2-methyl-1-propenyl)phenylborate, N,N-dimethylanilinium triphenyl-4-(1,2-dimethyl-1-propenyl)phenylborate, N,N-dimethylanilinium triphenyl-4-vinylphenylborate, N,N-dimethylanilinium triphenylvinylborate, N,N-dimethylanilinium allyltriphenylborate, trimethylammonium triphenyl4-vinylphenylborate, trimethylammonium triphenylvinylborate, trimethylammonium allyltriphenylborate, triphenylcarbonium triphenyl-4-vinylphenylborate, triphenylcarbonium triphenylvinylborate, triphenylcarbonium allyltriphenylborate, N,N-dimethylanilinium tris(pentafluorophenyl)-4-vinylphenylborate, N,N-dimethylanilinium tris(pentafluorophenyl)-3-vinylphenylborate, N,N-dimethylanilinium tris(pentafluorophenyl)-2-vinylphenylborate, N,N-dimethylanilinium tris(pentafluorophenyl)vinylborate, N,N-dimethylanilinium allyltris(pentafluorophenyl)borate, trimethylammonium tris(pentafluorophenyl)-4-vinylphenylborate, trimethylammonium tris(pentafluorophenyl)-3-vinylphenylborate, trimethylammonium tris(pentafluorophenyl)-2-vinylphenylborate, trimethylammonium tris(pentafluorophenyl)vinylborate, trimethylammonium allyltris(pentafluorophenyl)borate, triphenylcarbonium tris(pentafluorophenyl)-4-vinylphenylborate, triphenylcarbonium tris(pentafluorophenyl)-3-vinylphenylborate, triphenylcarbonium tris(pentafluorophenyl)-2-vinylphenylborate, tri(n-butyl)ammonium tris(pentafluorophenyl)-4-vinylphenylborate, ferrocenium tris(pentafluorophenyl)-4-vinylphenylborate, methyldiphenylammonium tris(pentafluorophenyl)-4-vinylphenylborate, methyldiphenylammonium tris(pentafluorophenyl)-3-vinylphenylborate, methyldiphenylammonium tris(pentafluorophenyl)-2-vinylphenylborate, N,N-dimethylanilinium bis(pentafluorophenyl)-bis(4-vinylphenyl)borate, N,N-dimethylanilinium bis(pentafluorophenyl)-bis(3-vinylphenyl)borate, and N,N-dimethylanilinium bis(pentafluorophenyl)-bis(2-vinylphenyl)borate.

Of these, boron-containing compounds wherein, in formula (1), $R^1$, $R^2$ and $R^3$ are a pentafluorophenyl group, $R^4$, $R^5$ and $R^6$ are a hydrogen atom, Y is a p-phenylene group and i is 1, are preferable. As examples of the preferable compound, there can be mentioned N,N-dimethylanilinium tris(pentafluorophenyl)-4-vinylphenylborate, trimethylammonium tris(pentafluorophenyl)-4-vinylphenylborate, and triphenylcarbonium tris(pentafluorophenyl)-4-vinylphenylborate. Of these, trimethylammonium tris(pentafluorophenyl)-4-vinylphenylborate is most preferable.

The boron-containing compound of formula (1) is synthesized by a process comprising the following two steps (1) and (2).

(1) Synthesis of an alkali metal salt of a boron compound

A Grignard reagent prepared from a metallic magnesium and a halogenated hydrocarbon having a carbon-carbon double bond, is placed together with borane in a solvent, and the mixture is stirred at a temperature of -80 to 80°C, preferably 0 to 30°C for 1 to 20 hours. Then an aqueous solution of an alkali metal carbonate is added to the mixture and the resulting mixed solution is stirred for 1 to 2 hours. An organic phase is separated from the solution, and then dried under a reduced pressure to give an alkali metal salt of a boron compound. As preferable examples of the solvent used, there can be mentioned tetrahydrofuran, diethyl ether, 1,2-dimethoxyethane, n-hexane and n-pentane.

(2) Synthesis of an ammonium salt or carbonium salt of a boron compound

The alkali metal salt of a boron compound, synthesized in the first step (1), and 1 to 10 equivalent, to the alkali metal salt of a boron compound, of an ammonium hydrochloride or a carbonium halide are stirred in a solvent at a temperature of 0 to 30°C for 1 to 5 hours to give an ammonium salt or carbonium salt of a boron compound. As preferable examples of the solvent used, there can be mentioned water, dichloromethane, acetone, methanol and toluene.

For example, trimethylammonium tris(pentafluorophenyl)-4-vinylphenylborate is synthesized according to the following reaction formula, wherein the abbreviations have the following meanings.

THF: tetrahydrofuran, Na: sodium, $Na_2CO_3$: sodium carbonate, $(CH_3)_3NHCl$: trimethylammonium hydrochloride, r.t.: room temperature, aq.: aqueous solution

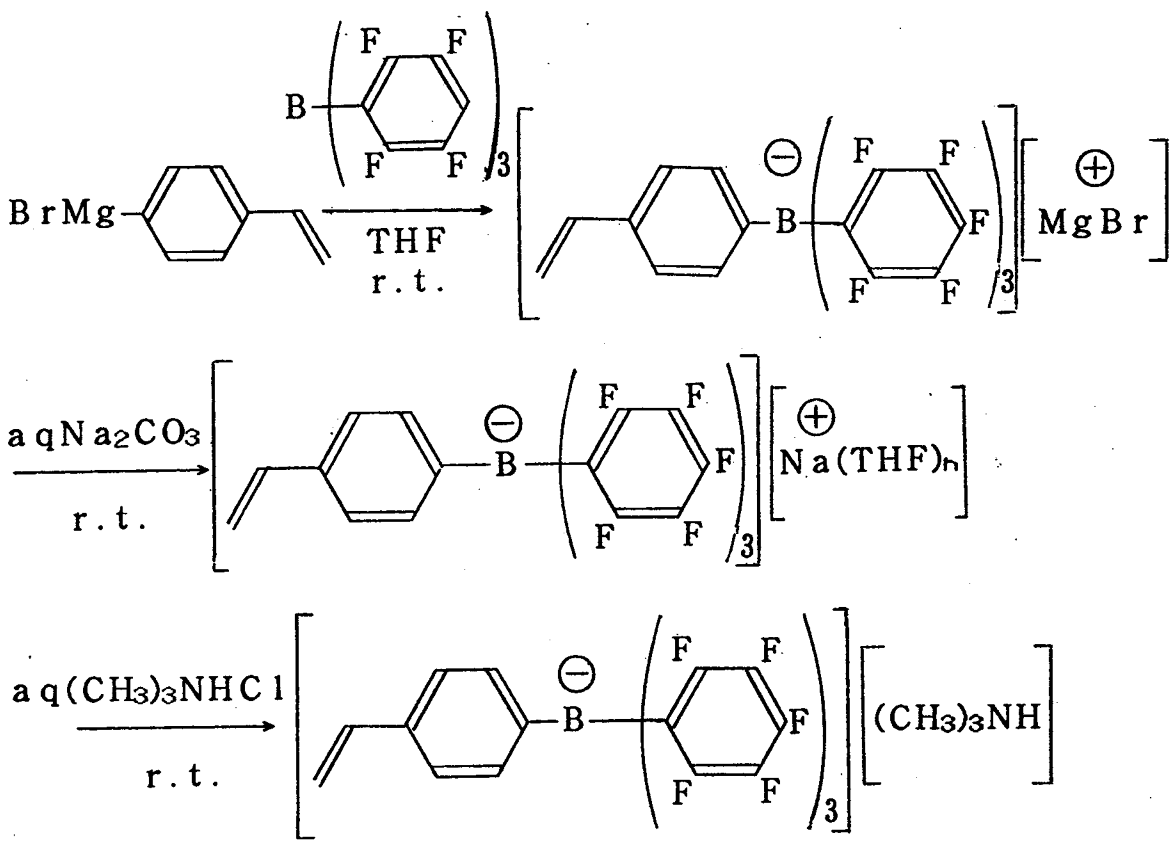


The boron-containing polymer of the present invention is either a homopolymer or copolymer prepared by polymerization of one or more of the boron-containing compound of formula (1), or a copolymer prepared by copolymerization of the boron-containing compound of formula (1) with one or more comonomers.

The comonomer used is represented by the following formula (2):

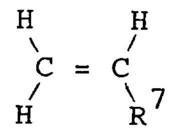

(2)

wherein C is a carbon atom, H is a hydrogen atom, and $R^7$ represents a hydrogen atom, a halogen atom, an alkyl group having 1 to 20 carbon atoms such as methyl, ethyl, n-propyl or n-butyl, an alkenyl group having 2 to 20 carbon atoms such as vinyl, 1-propenyl, 2-propenyl, 1-butenyl or 2-butenyl, an aryl group having 6 to 20 carbon atoms such as phenyl, a halogen-containing aryl group having 6 to 20 carbon atoms 4-fluorophenyl or pentafluorophenyl, an alkylaryl group having 7 to 20 carbon atoms such as 4-methylphenyl or 4-(1,1-dimethylethyl)phenyl, an arylalkenyl group having 8 to 20 carbon atoms such as 2-phenylvinyl or 2-(4-methylphenyl)vinyl, an alkylsilyl group having 1 to 20 carbon atoms such as trimethylsilyl or ethyldimethylsilyl, an arylsilyl group having 6 to 20 carbon atoms such as diphenylmethylsilyl or triphenylsilyl, or an alkoxysilyl group having 1 to 20 carbon atoms such as trimethoxysilyl, triethoxysilyl or diethoxymethylsilyl.

As specific examples of the comonomer of formula (2), there can be mentioned ethylene, propylene, 1-butene, 1-pentene, 1-hexene, butadiene, triethoxyvinylsilane, styrene, 2-fluorostyrene, 3-fluorostyrene, 4-fluorostyrene, 2,3-difluorostyrene, 2,4-difluorostyrene, 2,6-difluorostyrene, 2,3,4,5,6-pentafluorostyrene, 1,2-divinylbenzene, 1,3-divinylbenzene, 1,4-divinylbenzene, 2,4,5,6-tetrafluoro-1,3-divinylbenzene and 2,3,5,6-tetrafluoro-1,4-divinylbenzene. Of these, 2,3,4,5,6-pentafluorostyrene is preferable.

The boron-containing polymer of the present invention is prepared by homopolymerization of the boron-containing compound of formula (1) alone or copolymerization of the boron-containing compound of formula (1) with the comonomer of formula (2), and is comprises recurring units of the following formula (3) and optional recurring units of the following formula (4).

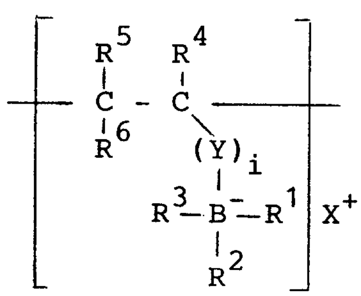

(3)

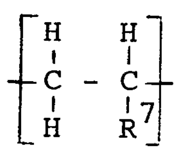

(4)

wherein B, C, $R^1$, $R^2$, $R^3$, $R^4$, $R^5$, $R^6$, Y, $X^+$ and i in formula (3) and $R^7$ in formula (4) are as defined above with regard to formulae (1) and (2), respectively.

As specific examples of the boron-containing polymer of the present invention, there can be mentioned poly(N,N-dimethylanilinium triphenyl-4-vinylphenylborate-co-styrene), poly(N,N-dimethylanilinium triphenyl-4-vinylphenylborate-co-2,3,4,5,6-pentafluorostyrene), poly(N,N-dimethylanilinium triphenyl-4-vinylphenylborate-co-triethoxyvinylsilane), poly(N,N-dimethylanilinium triphenylvinylborate-co-styrene), poly(N,N-dimethylanilinium triphenylvinylborate-co-2,3,4,5,6-pentafluorostyrene), poly(N,N-dimethylanilinium allyltriphenylborate-co-styrene), poly(trimethylammonium triphenyl-4-vinylphenylborate-co-styrene), poly(trimethylammonium triphenyl-4-vinylphenylborate-co-2,3,4,5,6-pentafluorostyrene), poly(trimethylammonium triphenylvinylborate-co-styrene), poly(trimethylammonium triphenylvinylborate-co-2,3,4,5,6-pentafluorostyrene), poly(trimethylammonium allyltriphenylborate-co-styrene), poly(trimethylammonium allyltriphenylborate-co-2,3,4,5,6-pentafluorostyrene), poly(triphenylcarbonium triphenyl-4-vinylphenylborate-co-styrene), poly(triphenylcarbonium triphenyl-4-vinylphenylborate-co-2,3,4,5,6-pentafluorostyrene), poly(triphenylcarbonium triphenylvinylborate-co-styrene), poly(triphenylcarbonium triphenylvinylborate-co-2,3,4,5,6-pentafluorostyrene), poly(triphenylcarbonium allyltriphenylborate-co-styrene), poly(triphenylcarbonium allyltriphenylborate-co-2,3,4,5,6-pentafluorostyrene), poly(N,N-dimethylannilinium tris(pentafluorophenyl)-4-vinylphenylborate-co-styrene), poly(N,N-dimethylanilinium tris(pentafluorophenyl)-4-vinylphenylborate-co-2,3,4,5,6-pentafluorostyrene), poly(N,N-dimethylannilinium tris(pentafluorophenyl)-4-vinylphenylborate-co-triethoxyvinylsilane), poly(N,N-dimethylannilinium tris(pentafluorophenyl)-3-vinylphenylborate-co-styrene), poly(N,N-dimethylanilinium tris(pentafluorophenyl)-3-vinylphenylborate-co-2,3,4,5,6-pentafluorostyrene), poly(N,N-dimethylanilinium tris(pentafluorophenyl)-3-vinylphenylborate-co-triethoxyvinylsilane), poly(N,N-dimethylanilinium tris(pentafluorophenyl)-2-vinylphenylborate-co-styrene), poly(N,N-dimethylanilinium tris(pentafluorophenyl)-2-vinylphenylborate-co-2,3,4,5,6-pentafluorostyrene), poly(N,N-dimethylannilinium tris(pentafluorophenyl)-2-vinylphenylborate-co-triethoxyvinylsilane), poly(N,N-dimethylanilinium tris(pentafluorophenyl)vinylborate-co-styrene), poly(N,N-dimethylanilinium tris(pentafluorophenyl)vinylborate-co-2,3,4,5,6-pentafluorostyrene), poly(N,N-dimethylanilinium allyltris(pentafluorophenyl)borate-co-styrene), poly(N,N-dimethylanilinium allyltris(pentafluorophenyl)borate-co-2,3,4,5,6-pentafluorostyrene), poly(trimethylammonium tris(pentafluorophenyl)-4-vinylphenylborate-co-styrene), poly(trimethylammonium tris(pentafluorophenyl)-4-vinylphenylborate-co-2,3,4,5,6-pentafluorostyrene), poly(trimethylammonium tris(pentafluorophenyl)-4-vinylphenylborate-co-triethoxyvinylsilane), tris(pentafluorophenyl)-3-vinylphenylborate-co-styrene), poly(trimethylammonium tris(pentafluorophenyl)-3-vinylphenylborate-co-2,3,4,5,6-pentafluorostyrene), poly(trimethylammonium tris(pentafluorophenyl)-3-vinylphenylborate-co-triethoxyvinylsilane), tris(pentafluorophenyl)-2-vinylphenylborate-co-styrene), poly(trimethylammonium tris(pentafluorophenyl)-2-vinylphenylborate-co-2,3,4,5,6-pentafluorostyrene), poly(trimethylammonium tris(pentafluorophenyl)-2-vinylphenylborate-co-triethoxyvinylsilane), poly(trimethylammonium tris(pentafluorophenyl)vinylborate-co-styrene), poly(trimethylammonium tris(pentafluorophenyl)vinylborate-co-2,3,4,5,6-pentafluorostyrene), poly(trimethylammonium allyltris(pentafluorophenyl)borate-co-styrene), poly(trimethylammonium allyltris(pentafluorophenyl)borate-co-2,3,4,5,6-pentafluorostyrene), poly(triphenylcarbonium tris(pentafluorophenyl)-4-vinylphenylborate-co-styrene), poly(triphenylcarbonium tris(pentafluorophenyl)-4-vinylphenylborate-co-2,3,4,5,6-pentafluorostyrene), poly(triphenylcarbonium tris(pentafluorophenyl)-4-vinylphenylborate-co-triethoxyvinylsilane), poly(triphenylcarbonium tris(pentafluorophenyl)-3-vinylphenylborate-co-styrene), poly(triphenylcarbonium tris(pentafluorophenyl)-3-vinylphenylborate-co-2,3,4,5,6-pentafluorostyrene), poly(triphenylcarbonium tris(pentafluorophenyl)-3-vinylphenylborate-co-triethoxyvinylsilane), poly(triphenylcarbonium tris(pentafluorophenyl)-2-vinylphenylborate-co-styrene), poly(triphenylcarbonium tris(pentafluorophenyl)-2-vinylphenylborate-co-2,3,4,5,6-pentafluorostyrene), poly(triphenylcarbonium tris(pentafluorophenyl)-2-vinylphenyl borate-co-triethoxyvinylsilane), poly(tri(n-butyl)ammonium tris(pentafluorophenyl)-4-vinylphenylborate-co-2,3,4,5,6-pentafluorostyrene), poly(ferrocenium tris(pentafluorophenyl)-4-vinylphenylborate-co-2,3,4,5,6-pentafluorostyrene), poly(methyldiphenylammonium tris(pentafluorophenyl)-4-vinylphenylborate-co-styrene), poly(methyldiphenylammonium tris(pentafluorophenyl)-4-vinylphenylborate-co-2,3,4,5,6-pentafluorostyrene), poly(methyldiphenylammonium tris(pentafluorophenyl)-4-vinylphenylborate-co-triethoxyvinylsilane), tris(pentafluorophenyl)-3-vinylphenylborate-co-styrene), poly(methyldiphenylammonium tris(pentafluorophenyl)-3-vinylphenylborate-co-2,3,4,5,6-pentafluorostyrene), poly(methyldiphenylammonium tris(pentafluorophenyl)-3-vinylphenylborate-co-triethoxyvinylsilane), tris(pentafluorophenyl)-2-vinylphenylborate-co-styrene), poly-(methyldiphenylammonium tris(pentafluorophenyl)-2-vinylphenylborate-co-2,3,4,5,6-pentafluorostyrene), poly(methyldiphenylammonium tris(pentafluorophenyl)-2-vinylphenylborate-co-triethoxyvinylsilane), poly(N,N-dimethylanilinium bis(pentafluorophenyl)-bis(4-vinylphenyl)borate-co-styrene, and poly(N,N-dimethylanilinium bis(pentafluorophenyl)-bis(4-vinylphenyl)borate-co-2,3,4,5,6-pentafluorostyrene.

Of these boron-containing copolymers, those are preferable wherein $R^1$, $R^2$ and $R^3$ are pentafluorophenyl, $R^4$, $R^5$ and $R^6$ are hydrogen, Y is phenylene, i is 1 in formula (3), and $R^7$ is phenyl or 2,3,4,5,6-pentafluorophenyl in formula (4). As specific examples of such preferable boron-containing copolymers, there can be mentioned poly(N,N-dimethylanilinium tris(pentafluorophenyl)-4-vinylphenylborate-co-styrene), poly(N,N-dimethylanilinium tris(pentafluorophenyl)-4-vinylphenylborate-co-2,3,4,5,6-pentafluorostyrene), poly(trimethylammonium tris(pentafluorophenyl)-4-vinylphenylborate-co-styrene), poly(trimethylammonium tris(pentafluorophenyl)-4-vinylphenylborate-co-2,3,4,5,6-pentafluorostyrene), poly(triphenylcarbonium tris(pentafluorophenyl)-4-vinylphenylborate-co-styrene), poly(triphenylcarbonium tris(pentafluorophenyl)-4-vinylphenylborate-co-2,3,4,5,6-pentafluorostyrene), poly(triphenylcarbonium tris(pentafluorophenyl)-3-vinylphenylborate-co-styrene), poly(tri-(n-butyl)ammonium tris(pentafluorophenyl)-4-vinylphenylborate-co-2,3,4,5,6-pentafluorostyrene), poly(ferrocenium tris(pentafluorophenyl)-4-vinylphenylborate-co-2,3,4,5,6-pentafluorostyrene), poly(methyldiphenylammonium tris(pentafluorophenyl)-4-vinylphenylborate-co-styrene), and poly(methyldiphenylammonium tris(pentafluorophenyl)-4-vinylphenylborate-co-2,3,4,5,6-pentafluorostyrene). Especially, poly(trimethylammonium tris(pentafluorophenyl)-4-vinylphenylborate-co-styrene) is most preferable.

The amount of the recurring units of formula (3) in the boron-containing polymer of the present invention is 5 to 100% by mole, preferably 5 to 50% by mole.

The boron-containing polymer of the invention is essentially a random copolymer wherein the recurring units of formula (3) and the recurring units (4) are arranged in a random and disordered manner. Thus, the following sequences

of recurring units are found in the copolymer.

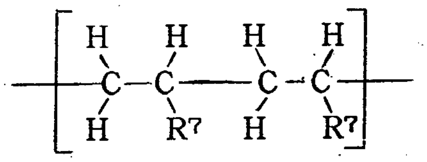

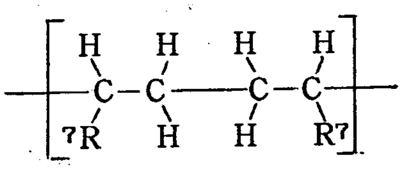

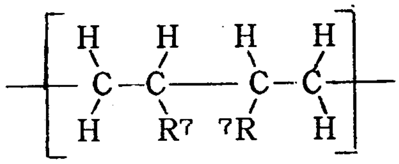

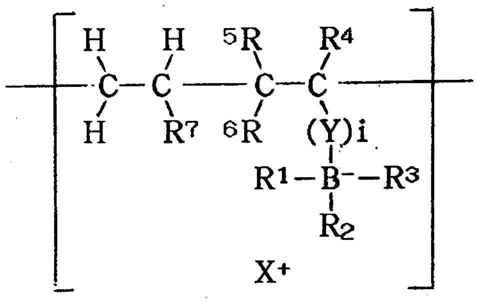

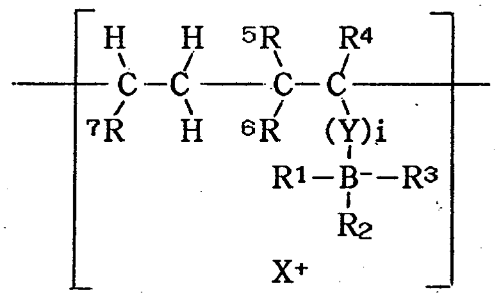

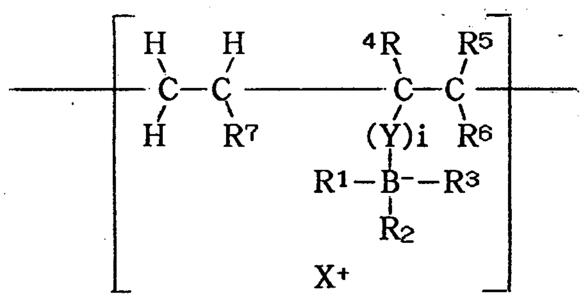

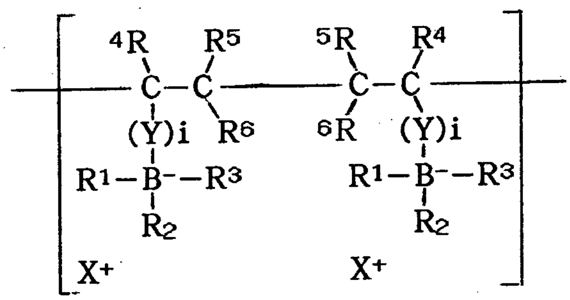

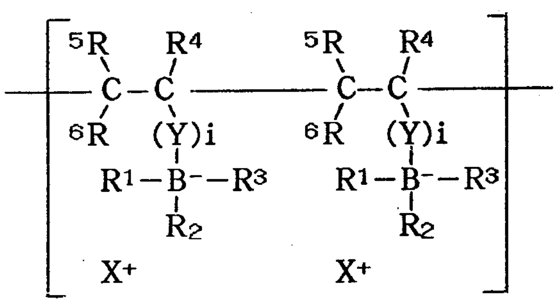

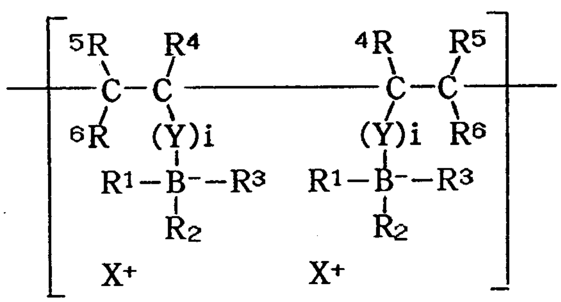

The boron-containing polymer of the present invention has a weight average molecular weight (Mw) of 1,000 to 1,000,000, preferably 1,000 to 50,000, as measured by gel permeation chromatography.

The boron-containing polymer of the present invention can be made by (co)polymerizing the polymerizable boron-containing compound of formula (1) and the optional monomer of formula (2) in the presence of a polymerization initiator at a temperature of -100 to 200°C, preferably 0 to 100°C, more preferably 20 to 80°C in an appropriate solvent.

As specific examples of the solvent used, there can be mentioned n-hexane, n-pentane, n-heptane, n-octane, benzene, toluene, dichloromethane, 1,2-dichloroethane, chloroform, tetrachloroethane, bromobenzene, diethyl ether, tetrahydrofuran, 1,2-dimethoxyethane, 1,4-dioxane, acetone, methyl ethyl ketone, methanol, ethanol, t-butanol, isopropanol, acetonitrile, N,N-dimethylformamide and water. Of these, acetonitrile, toluene and acetone are preferable.

As specific examples of the polymerization initiator, there can be mentioned azobisisobutyronitrile, benzoyl peroxide, hydrogen peroxide, boron trifluoride ethyl etherate, concentrated sulfuric acid, iodine, tin tetrachloride, perchloric acid,

sodium, potassium, lithium, n-butyl-lithium and liquid ammonia. Of these, azobisisobutyronitrile and benzoyl peroxide are preferable.

The as-obtained polymer can be purified by reprecipitaion. For example, 3 g of the polymer is dissolved in 30 ml of acetone at room temperature, and the solution is put in a salient amount of hexane. By repeating this purification procedure, unreacted monomers as the main impurities remaining in the polymer can be removed.

Methods of determining the monomeric composition of the polymer and a method of determining the weight average molecular weight expressed in terms of polystyrene by gel permeation chromatography will now be described with reference to poly(trimethylammonium tris(pentafluorophenyl)-4-vinylphenylborate-co-stryrene) prepared in Example 4 as an optimum example of the boron-containing polymer of the present invention.

Determination of Monomeric Composition

(a) $^1$H-NMR method

In dichloromethane-$d_2$, 100 mg of poly(trimethylammonium tris(pentafluorophenyl)-4-vinylphenylborate-co-stryrene) was dissolved, and the obtained solution is used as a sample for $^1$H-NMR. A $^1$H-NMR spectrum of the polymer as measured by using TMS as standard reference is shown in Fig. 1. The peak integrated value X at a $\delta$ value of 2.537 ppm attributed to the trimethylammonium group in the boron-containing monomer of formula (1) is calculated from the NMR spectrum. The peak integrated value Y at a $\delta$ value ranging from 6.2 to 7.8 attributed to an aromatic proton is calculated from the same NMR spectrum. From values X and Y, the amount ($\underline{m}$ % by mole) of trimethylammonium tris(pentafluorophenyl)-4-vinylphenylborate is determined by the following equation.

$$\underline{m}\ (\%\ \text{by mole}) = (1/[(Y/5X) - 1.8]) \times 100$$

(b) Elemental analysis method

Trimethylammonium tris(pentafluorophenyl)-4-vinylphenylborate has a molecular weight of 675.25, a chlorine content of 51.58% and a hydrogen content of 2.54%; and styrene has a molecular weight of 104.15, a carbon content of 92.26% and a hydrogen content of 7.74%. The found value of carbon content (C %) in the copolymer and the amount ($\underline{m}$ % by mole) of trimethylammonium tris(pentafluorophenyl)-4-vinylphenylborate units in the copolymer have the following relation:

$$[675.25 \times 51.58\underline{m}/100 + 104.15 \times 92.26\ (1 - (\underline{m}/100))] \times [675.25\underline{m}/100 + 104.15\ (1-(\underline{m}/100))] = C$$

Thus, $\underline{m} = [104.15 \times 100\ (92.26 - C)/(571.1C - 25221)]$

The presence of the recurring units of formula (3) in the boron-containing polymer can be confirmed by the determination of $^{19}$F-NMR of the polymer as purified by reprecipitation as mentioned above (using as standard reference a signal at 0 ppm of fluorotrichloromethane dissolved in dichloromethane-$d_2$) and the determination of $^{11}$B-NMR of the purified polymer (using as standard reference a signal at -8.7 ppm of trifluoroborane diethyl ether complex dissolved in dichloromethane-$d_2$). For example, $^{19}$F-NMR spectrum and $^{11}$B-NMR spectrum of the purified poly(trimethylammonium tris(pentafluorophenyl)-4-vinylphenylborate-co-stryrene) polymer are shown in Fig. 2 and Fig. 3, respectively. It is found that the respective signals in the $^{19}$F-NMR spectrum are attributed to -130.08 (s, 2F, o-F), -166.7 (s, 2F, m-F) and -163.9 (s, 1F, p-F), and the manner of division of the signals is different from that as observed on the spectrum of the trimethylammonium tris(pentafluorophenyl)-4-vinylphenylborate monomer. As a typical example of the spectrum of the boron-containing monomer of formula (3), the spectrum of trimethylammonium tris(pentafluorophenyl)-4-vinylphenylborate dissolved in dichloromethane-$d_2$ (using as standard reference a signal at 0 ppm of fluorotrichloromethane dissolved in dichloromethane-$d_2$) is shown in Fig. 4. The respective signals in this spectrum are attributed to $\delta$-130.8(d, 2F, o-F), -166.8 (t, 2F, m-F) and -163.7 (t, 1F, p-F).

In the $^{11}$B-NMR spectrum of the polymer (using as standard reference a signal at -8.7 ppm of trifluoroborane diethyl ether complex dissolved in dichloromethane-$d_2$), a signal for a singlet is found at -21.74 ppm. It is found that this signal is approximately the same as that as observed on the spectrum of the trimethylammonium tris(pentafluorophenyl)-4-vinylphenylborate monomer. $^{11}$B-NMR spectrum of trimethylammonium tris(pentafluorophenyl)-4-vinylphenylborate dissolved in dichloromethane-$d_2$ is shown in Fig. 5. A signal for a singlet is found at -21.76 ppm.

The boron-containing polymer of the present invention is beneficially used in combination with a metallocene compound for a catalyst for the production of a polyolefin.

The metallocene compound used in combination with the boron-containing polymer for the preparation of a catalyst for polymerization of an olefin is represented by the following formula (5) or (6).

$$[(\eta_5\text{-}C_5R^8{}_h)_pR^{10}{}_s(\eta_5\text{-}C_5R^9{}_j)]MeQ_{3-p} \qquad (5)$$

$$[(R^9N)pR^{10}_s(\eta_5\text{-}C_5R^8_h)]MeQ'_{3-p} \quad (6)$$

wherein N is a nitrogen atom,

Me is a transition metal selected from those which belong to groups 4 and 5 of the periodic table as stipulated in the Nomenclature of Inorganic Chemistry Definitive Rules 1990; preferably selected from the group consisting of titanium, zirconium, hafnium, vanadium, niobium and tantalum, more preferably selected from titanium, zirconium and hafnium, and is most preferably zirconium;

$(\eta_5\text{-}C_5R^8_h)_p$ and $(\eta_5\text{-}C_5R^9_j)$ are a cyclopentadienyl ring or a substituted cyclopentadienyl ring, where h and j are an integer of 2 to 5, and $R^8$s and $R^9$s independently represent a hydrogen atom, an alkyl or alkenyl group having 1 to 20 carbon atoms, an aryl group having 6 to 20 carbon atoms, an alkylaryl or arylalkyl group having 7 to 20 carbon atoms or an alkylsilyl or silylalkyl group having 1 to 20 carbon atoms, or two adjacent $R^8$s or $R^9$s may form a ring together with the two adjacent carbon atoms in the substituted cyclopentadienyl ring;

$R^{10}$ is a binding group selected from the group consisting of an alkylene group having 1 to 4 carbon atoms, a dialkylgermylene group having 1 to 4 carbon atoms in each alkyl group, and an alkylsilylene group having 1 to 4 carbon atoms; said binding group having a function of binding the $(\eta_5\text{-}C_5R^8_h)_p$ ring with the $(\eta_5\text{-}C_5R^9_j)$ ring in the metallocene compound of formula (5) or binding the $(\eta_5\text{-}C_5R^8_h)_p$ ring with the $(R^9N)_p$ in the metallocene compound of formula (6);

Q and Q' are a hydrogen atom, a halogen atom a hydrocarbon group having 1 to 20 carbon atoms,

s is 0 or 1,

p is 0 or 1, provided that, when s is 0, p is 0, and

each of h and j is 4 when s is 1, and 5 when s is 0.

Preferred metallocene compounds vary depending upon the particular kind of an olefin to be polymerized in the presence of the catalyst. For example, as preferred examples of the metallocene compound used for the preparation of a catalyst for the production of polyethylene and ethylene copolymers, there can be mentioned bis(cyclopentadienyl)titanium dichloride, bis(methylcyclopentadienyl)zirconium dimethyl, bis(pentamethylcyclopentadienyl)zirconium dichloride, bis(n-butylcyclopentadienyl)zirconium dichloride, bis(trimethylsilylcyclopentadienyl)hafnium dimethyl, ethylenebis(1-indenyl)zirconium dichloride, ethylenebis(4,5,6,7-tetrahydroindenyl)zirconium dichloride, dimethylsilylenebis(1-indenyl)zirconium dichloride, dimethylsilylenebis(1-indenyl)zirconium dimethyl and dimethylsilylenebis(benzoindenyl)zirconium dichloride.

As preferred examples of the metallocene compound used for the preparation of a catalyst for the production of isotactic polypropylene, there can be mentioned ethylenebis(1-indenyl)zirconium dichloride, ethylenebis(4,5,6,7-tetrahydroindenyl)zirconium dichloride, dimethylsilylenebis(1-indenyl)zirconium dichloride, dimethylsilylenebis(1-indenyl)zirconium dimethyl, dimethylsilylenebis(4,5-benzoindenyl)zirconium dichloride, dimethylsilylenebis(2-methyl-4-naphthylindenyl)zirconium dichloride, dimethylsilylenebis(2-methylindenyl)zirconium dichloride, dimethylsilylenebis(2-methyl-4-isopropylindenyl)zirconium dichloride, dimethylsilylenebis(2-methyl-4-phenylindenyl)zirconium dichloride, isopropylidene(3-t-butylcyclopentadienyl)(3-t-butylindenyl)titanium dichloride, isopropylidene(3-t-butylcyclopentadienyl)(3-t-butylindenyl)zirconium dichloride and dimethylsilylene(3-t-butylcyclopentadienyl)fluorenylzirconium dichloride. The metallocene compounds may be used either alone or in combination.

As a preferred example of the metallocene compound used for the preparation of a catalyst for the production of syndiotactic polypropylene, there can be mentioned isopropylidene(cyclopentadienyl)fluorenylzirconium dichloride. As a preferred example of the metallocene compound used for the preparation of a catalyst for the production of syndiotactic polystyrene, there can be mentioned cyclopentadienyltitanium trichloride.

If desired, an organoalminum compound can be used in combination with the above-mentioned boron-containing polymer and the metallocene compound for the preparation of a catalyst for polymerization of an olefin.

The organoaluminum compound used is represented by the following formula (7):

$$R^{11}R^{12}R^{13}Al \quad (7)$$

wherein Al is an aluminum atom, $R^{11}$, $R^{12}$ and $R^{13}$ independently represent a hydrogen atom, an alkyl group having 1 to 10 carbon atoms or a halogen-containing alkyl group having 1 to 10 carbon atoms. Of these, an alky group having 1 to 6 carbon atoms is preferable, and an alkyl group having 2 to 4 carbon atoms is more preferable. As specific examples of the organoaluminum compound, there can be mentioned trimethylaluminum, triethylaluminum, tripropylaluminum, tri(n-butyl)aluminum, triisobutylaluminum, tri(n-hexyl)aluminum, dimethylaluminum chloride, diethylaluminum chloride and diisobutylaluminum hydride. These compounds are mere exemplification and the organoaluminum compound used is not limited thereto. Of these, triethylaluminum and triisobutylaluminum are preferable.

As the methods by which the catalyst is prepared from (a) the boron-containing polymer, (b) the metallocene compound and (c) the optional organoaluminum compound, and the prepared catalyst is used, there can be mentioned the following four methods (A), (B), (C) and (D).

Method (A)

Ingredients (a) and (b) are pre-contacted with each other in an aromatic hydrocarbon solvent, the solvent is removed, a poor solvent is added to form a slurry, and then the slurry is introduced into a reactor. As preferable examples of the aromatic hydrocarbon solvent and the poor solvent, there can be mentioned toluene and n-hexane, respectively. The amounts of ingredients (a) and (b) are preferably such that the weight ratio of (a)/(b) is in the range of 1/1 to 1/0.001.

Method (B)

Ingredients (a) and (b) are pre-contacted with each other in an aromatic hydrocarbon solvent, the solvent is removed, a poor solvent is added to form a slurry, and then the slurry is introduced into a reactor in which ingredient (c) has been previously placed. In this method the amount of ingredient (c) is preferably such that the molar ratio of (b)/(c) is in the range of 1/1 to 1/1,000.

Method (C)

Ingredients (b) and (c) are pre-contacted with each other in a hydrocarbon solvent, ingredient (a) is incorporated therein, the solvent is removed, a poor solvent is added to form a slurry, and then the slurry is placed into a reactor. In this method the amounts of ingredients (b) and (c) are preferably such that the molar ratio of (b)/(c) is in the range of 1/2 to 1/50.

Method (D)

A catalyst slurry is prepared from ingredients (b), (c) and (a) by the same procedure as that in method (C), and the slurry is placed into a reactor in which ingredient (c) has been previously placed.

It is possible that an olefin monomer is pre-polymerized in the presence of a catalyst prepared from ingredients (a), (b) and (c), and the thus-obtained prepolymer is used as a catalyst for polymerization of an olefin. As specific examples of the olefin monomer to be pre-polymerized, there can be mentioned ethylene, propylene and styrene.

The olefin monomer which is polymerized in the presence of the catalyst of the present invention is selected from those which have 2 to 20 carbon atoms, and is more specifically selected from linear or branched monoolefins having 2 to 20 carbon atoms, α-olefins having an aryl substituent and having 8 to 20 carbon atoms, and linear or branched non-conjugated diolefins having 6 to 20 carbon atoms. As specific examples of the olefin monomer, there can be mentioned linear monoolefins such as ethylene, propylene, 1-butene, 1-pentene, 1-hexene, 1-octene and 1-decene, branched monoolefins such as 3-methyl-1-butene, 3-methyl-1-pentene and 4-methyl-1-pentene, monoolefins having an aryl substituent such as styrene, 4-methylstyrene and 4-chlorostyrene, and non-conjugated diolefins such as 1,5-hexadiene, 1,6-heptadiene, 1,9-decadiene and 2,5-dimethyl-1,5-hexadiene. These olefin monomers may be used either alone or as a mixture composed of at least two of these monomers at an optional ratio.

In the process for polymerizing an olefin by using the catalyst of the present invention, water can be used as a chain transfer agent, i.e., molecular weight modifier.

The catalyst prepared from the essential ingredients (a) and (b) and the optional ingredient (c) can be used in a slurry process and a vapor phase process. In the slurry process, hydrocarbon solvents such as propane, butane, isobutane, pentane, isopentane, hexane and cyclohexane can be used as a polymerization medium. Preferable solvents are butane and isobutane. In these solvents an organoaluminum compound (c) can be incorporated. In this case, the concentration of the organoaluminum compound is preferably in the range of 1.0 to 7.0 m-mol/l, more preferably in the range of 2.0 to 5.0 m-mol/l. Where ethylene is polymerized, the partial pressure of ethylene is preferably in the range of 0.1 to 20 $kg/cm^2$. The polymerization temperature is preferably 50 to 90°C, more preferably 60 to 80°C.

In the vapor phase process, an organoaluminum compound (c) can be incorporated in the vapor phase. In this case the concentration of the organoaluminum compound in the vapor phase reaction system is preferably in the range of 50 to 500 ppm, more preferably 150 to 400 ppm. Where ethylene is polymerized, the partial pressure of ethylene is preferably in the range of 0.1 to 20 $kg/cm^2$. The polymerization temperature is preferably 50 to 90°C, more preferably 60 to 80°C.

The present invention will now be described specifically by the following examples that by no means limit the scope of the invention.

The instruments used for analyses in the examples are as follows.

Nuclear magnetic resonance (NMR) spectrum: JEOL EX-400.

Gel permeation chromatography (GPC): Waters 150C.

Elemental analysis: Heraeus CHN RAPID.

Infrared spectrum: Perkin-Elmer 1720-X.

Example 1

Synthesis of Trimethylammonium Trispentafluorophenyl-4-Vinylphenylborate (1)

In tetrahydrofuran (THF), 21.0 m-mol of 4-vinylphenylmagnesium bromide, prepared from dry magnesium and 4-bromostyrene, was incorporated with 15.0 m-mol of trispentafluorophenylborane (226 ml of 3.4% solution in Isopar-E supplied by Asahi Glass Co.) in an nitrogen atmosphere at room temperature, and the mixture was stirred for 17 hours to give a light yellow suspension. To this suspension, 300 ml of an aqueous solution of 4.7694 g (45.0 m-mol) of anhydrous sodium carbonate was added whereby a salient amount of a white solid was precipitated. The solid was filtered off and 200 ml of a saturated aqueous sodium chloride solution was added to the filtrate. The filtrate was subjected to extraction with THF. The obtained organic phase was dried with anhydrous magnesium sulfate, distilled under a reduced pressure to remove the solvent, and then, dried under a reduced pressure at 50°C for 4 hours to give 6.84 g of a white solid. NMR spectroscopic analysis revealed that the solid was sodium trispentafluorophenyl-4-vinylphenylborate di-THF-adduct. The yield was 58.2%.

In 50 ml of water, the obtained sodium salt (2.91 m-mol) was suspended, and an aqueous solution of 1.395 g (14.6 m-mol) of trimethylammonium hydrochloride was dropwise added to the suspension at room temperature, and the suspension was stirred for 40 minutes. When the stirring was stopped and allowed to stand, a white solid precipitated. The solid was filtered, thoroughly washed with water and hexane, and then dried under a reduced pressure to give 1.92 g of the intended trimethylammonium salt (yield: 98.0%).

| Elemental analysis<br>Molecular formula: $C_{29}H_{17}BF_{15}N$ | | | |
|---|---|---|---|
| | C | H | N |
| Calcd. (%) | 51.58 | 2.54 | 2.07 |
| Found (%) | 51.36 | 2.71 | 2.07 |

Example 2

Synthesis of N,N-Dimethylanilinium Trispentafluorophenyl-4-Vinylphenylborate (2)

To 50 ml of an aqueous solution of 2.276 g (2.91 m-mol) of sodium trispentafluorophenyl-4-vinylphenylborate di-THF-adduct prepared in Example 1, 20 ml of an aqueous solution of 0.632 g (4.4 m-mol) of N,N-dimethylanilinium hydrochloride was gently added at 0°C, and the mixture was stirred for one hour. When the stirring was stopped and allowed to stand, a white solid precipitated. The solid was filtered off, thoroughly washed with water and hexane, and then dried under a reduced pressure to give 1.92 g of the intended compound. The yield was 90.0%.

| Elemental analysis<br>Molecular formula: $C_{34}H_{19}BF_{15}N$ | | | |
|---|---|---|---|
| | C | H | N |
| Calcd. (%) | 55.39 | 2.60 | 1.90 |
| Found (%) | 55.30 | 2.70 | 1.93 |

Example 3

Synthesis of Triphenylcarbonium Trispentafluorophenyl-4-Vinylphenylborate (3)

To 50 ml of a suspension in dichloromethane of 2.276 g (2.91 m-mol) of sodium trispentafluorophenyl-4-vinylphenylborate di-THF-adduct prepared in Example 1, 20 ml of a solution in dichloromethane of 0.892 g (3.2 m-mol) of trichlorophenylmethane was dropwise added, and the mixture was stirred at room temperature for one hour. The liquid was subjected to filtration and then the filtrate was distilled under a reduced pressure to remove the solvent, whereby 1.40 g of the intended compound was obtained. The yield was 56.0%.

| Elemental analysis<br>Molecular formula: $C_{45}H_{22}BF_{15}$ | | | |
|---|---|---|---|
| | C | H | N |
| Calcd. (%) | 62.96 | 2.58 | 0.00 |
| Found (%) | 62.98 | 2.62 | 0.00 |

Synthesis of Boron-containing Copolymer

Example 4

Synthesis of Poly(trimethylammonium Trispentafluorophenyl-4-Vinylphenylborate (1)-co-Styrene) (4)

A glass ampule having a volume of 20 ml was charged with 1.350 g (2.0 m-mol) of trimethylammonium trispentafluorophenyl-4-vinylphenylborate (1) synthesized in Example 1, 1.15 ml (10 m-mol) of purified styrene, 0.054 g of azobisisobutyronitrile and 3.4 ml of acetonitrile. The content was thoroughly deaerated, and the ampule was sealed. The content was stirred at 80°C for 20 hours to effect a polymerization. After the polymerization was completed, the content was diluted with acetone, and reprecipitated with hexane to give a white solid. The reprecipitation was repeated five times to give 1.70 g of a purified white solid. $^{1}H$-, $^{19}F$- and $^{11}B$-NMR spectroscopic analyses revealed that the solid was poly(trimethylammonium trispentafluorophenyl-4-vinylphenylborate (1)-co-styrene). The yield was 71.0%. The monomeric composition ratio of the boron-containing monomer (1) : styrene (m : n % by mol) as calculated from the integrated value of the $^{1}H$-NMR spectrum was 17.9 : 82.1 % by mol. This monomeric composition ratio as calculated from the integrated value of the $^{1}H$-NMR spectrum was completely in agreement with that as calculated from the elemental analysis results.

| Elemental analysis: | | | |
|---|---|---|---|
| | C | H | N |
| Calcd. (%) | 69.29 | 4.80 | 1.17 |
| Found (%) | 70.35 | 5.69 | 1.73 |
| Molecular weight: Mn = 2,100, Mw = 3,200 | | | |

Examples 5 to 8

The procedures in Example 4 were repeated wherein trimethylammonium trispentafluorophenyl-4-vinylphenylborate (1) or N,N-dimethylanilinium trispentafluorophenyl-4-vinylphenylborate (2) was used as the boron-containing monomer, and styrene or 2,3,4,5,6-pentafluorostyrene was used as the comonomer to be copolymerized with the boron-containing monomer. The polymerization conditions were as follows.

Initiator: azobisisobutyronitrile, 3% by mol
Solvent: acetonitrile, 3.4 ml
Polymerization temperature: 80°C
Polymerization time: 20 hours

The amounts of the monomers, the yield, monomeric composition ratio, number average molecular weight (Mn) and weight average molecular weight (Mw) of the copolymer are shown in Table 1.

Table 1

| | Examples | | | | |
|---|---|---|---|---|---|
| | 4 | 5*[1] | 6 | 7 | 8 |
| Amounts of monomers | | | | | |
| Boron-containing monomer *2 (1) (m-mol) | 2.0 | 2.0 | 2.0 | - | - |
| (2) (m-mol) | - | - | - | 2.0 | 2.0 |
| Styrene (m-mol) | 10.0 | 20.0 | - | 20.0 | - |
| 2,3,4,5,6-Pentafluoro-styrene (m-mol) | - | - | 20.0 | - | 20.0 |
| Copolymers | | | | | |
| Copolymer No. *6 | (4) | (5) | (6) | (7) | (8) |
| Yield g (%) | 1.70(71) | 3.36(96) | 1.46(28) | 2.70(76) | 2.79(52) |
| Monomeric composition ratio (m/n) (mol %) | 17.9/82.1 *3 | 10.8/89.2 *4 | 7.6/92.4 *3 | 8.8/91.2 *4 | 9.2/90.8 *4 |
| Molecular weight Mn *5 | 2,100 | - | 7,900 | 4,800 | 9,600 |
| Molecular weight Mw *5 | 3,200 | - | 10,200 | 8,700 | 12,800 |

Note:

*1 0.88 m-mol of 1,4-divinylbenzene was added as a crosslinker

*2 (1) Trimethylammonium trispentafluorophenyl-4-vinylphenylborate

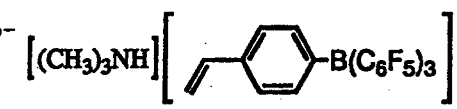

(2) N,N-dimethylanilinium trispentafluorophenyl-4-vinylphenylborate

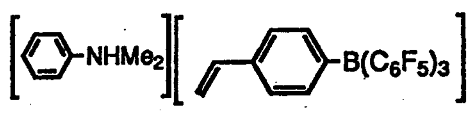

*3 m/n calculated from the integrated value of NMR spectrum

*4 m/n calculated from the elemental analysis values

*5 Determined by GPC measurement using 1,3,5-trichlorobenzene as solvent

*6 Structural formulae of the copolymers are as follows.

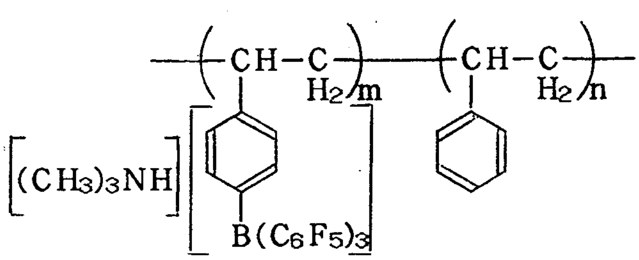

(4), (5)

Examples 4, 5

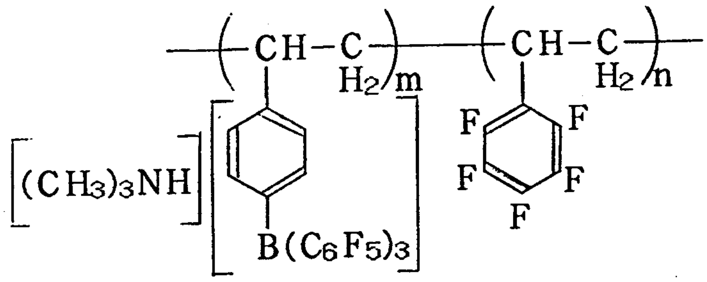

(6)

Example 6

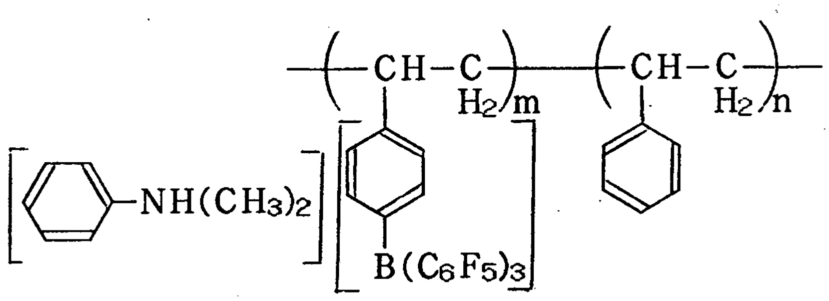

(7)

Example 7

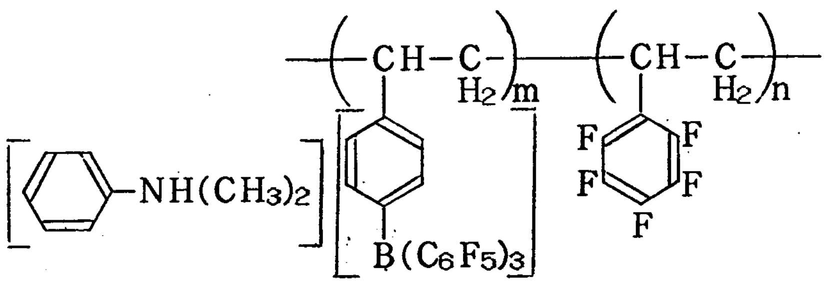

(8)

Example 8

Comparative Example 1

The procedure of radical copolymerization with styrene in Example 6 was repeated wherein trimethylammonium tetrakis(pentafluorophenyl)borate was used instead of trimethylammonium trispentafluorophenyl-4-vinylphenylborate as the boron-containing monomer. The resultant polymer was purified with acetone and hexane, and $^{19}F$- and $^{11}B$ NMR spectroscopic analyses revealed that no peaks were observed, namely, trimethylammonium tetrakis(pentafluorophenyl)borate units were not found in the polymer.

Preparation of solid Catalyst from Metallocene Compound, Boron-containing Copolymer and Organoaluminum Compound

Example 9

To a solution in toluene of 0.277 g of zirconocene dichloride, 2.0 ml of a triisobutylaluminum (TIBA) solution in toluene having a 0.5 mol/l concentration was added to prepare a zirconocene/TIBA mixed solution in toluene having a concentration of 0.0316 m-mol/ml.

In 10 ml of toluene, 0.0692 g of poly(trimethylammonium trispentafluorophenyl-4-vinylphenylborate (1)-co-styrene) (17.9 : 82.1 mol%) (4), synthesized in Example 4, was dissolved to obtain a solution of a boron-containing copolymer in toluene. The amount of the boron-containing monomer in the copolymer was 60 μmol as calculated from the monomeric composition. To this boron-containing copolymer solution in toluene, 1.72 ml (54.4 μmol) of the zirconocene/TIBA mixed solution in toluene having a concentration of 0.0316 m-mol/ml, prepared above, was added, and the mixture was stirred at room temperature for one hour and then subjected to distillation under a reduced pressure to remove toluene whereby a white solid was obtained. The solid was thoroughly washed with n-hexane, dried under a reduced pressure to yield 0.0761 g of a solid catalyst.

Example 10

The procedure described in Example 9 was repeated wherein 0.182 g (corresponding to 60 µmol of the boron-containing monomer) of poly(trimethylammonium trispentafluorophenyl-4-vinylphenylborate-co-2,3,4,5,6-pentafluorostyrene) synthesized in Example 6 and 1.72 ml (54.4 µmol) of the zirconocene/TIBA mixed solution in toluene having a concentration of 0.0316 m-mol/ml, prepared in Example 9, were used to give 0.191 g of a solid catalyst.

Example 11

In a solution in toluene of 0.425 g of dimethylsilylenebisindenylzirconium dichloride, 2.0 ml of a triisobutylaluminum (TIBA) solution in toluene having a concentration of 0.5 mol/l to give a dimethylsilylenebisindenylzirconium dichloride/TIBA mixed solution in toluene having a concentration of 0.0316 m-mol/ml.

The procedure described in Example 9 was repeated wherein 1.72 ml (54.4 µmol) of the dimethylsilylenebisindenylzirconium dichloride/TIBA mixed solution in toluene was used instead of the zirconocene/TIBA mixed solution in toluene to give 0.0836 g of a solid catalyst.

Example 12

The procedure described in Example 9 was repeated wherein 0.109 g (corresponding to 60 µmol of the boron-containing monomer) of poly(N,N-dimethylanilinium trispentafluorophenyl-4-vinylphenylborate-co-styrene) (7) (8.8 : 91.2 mol%), synthesized in Example 7, was used instead of the poly(trimethylammonium trispentafluorophenyl-4-vinylphenylborate-co-styrene) (4), synthesized in Example 4, to give 0.118 g of a solid catalyst.

Example 13

The procedure described in Example 9 was repeated wherein 0.159 g (corresponding to 60 µmol of the boron-containing monomer) of poly(N,N-dimethylanilinium trispentafluorophenyl-4-vinylphenylborate-co-2,3,4,5,6-pentafluorostyrene) (8) (9.2 : 90.8 mol%), synthesized in Example 8, was used instead of the poly(trimethylammonium trispentafluorophenyl-4-vinylphenylborate-co-styrene) (4), synthesized in Example 4, to give 0.167 g of a solid catalyst.

Example 14

The procedure described in Example 9 was repeated wherein 0.159 g (corresponding to 60 µmol of the boron-containing monomer) of poly(N,N-dimethylanilinium trispentafluorophenyl-4-vinylphenylborate-co-2,3,4,5,6-pentafluorostyrene) (8) (9.2 : 90.8 mol%), synthesized in Example 8, was used instead of the poly(trimethylammonium trispentafluorophenyl-4-vinylphenylborate-co-styrene) (4), synthesized in Example 4, and 1.72 ml (54.4 µmol) of the dimethylsilylenebisindenylzirconium dichloride/TIBA mixed solution in toluene, prepared in Example 11, was used instead of the zirconocene/TIBA mixed solution in toluene to give 0.187 g of a solid catalyst.

Comparative Example 2

Treatment of Silica with Ethylaluminoxane

A flask having a volume of 100 ml was charged with 2.0 g of silica having a surface area of 300 $m^2/g$ and an average particle diameter of 57 µm, a solution in toluene of ethylaluminoxane in an amount of 25 m-mol as the aluminum atom, prepared by the method described in Japanese Unexamined Patent Publication No. 5-155920, and 20 ml of toluene. The content was stirred at 50°C for 3 hours. A supernatant liquid was removed from the thus-treated product, and the product was washed with 50 ml of heptane three times whereby the treatment of silica with was completed.

Preparation of Solid Catalyst Component (S1)

In heptane, 0.30 g of zirconocene dimethyl was contacted with the ethylaluminoxane-treated silica at room temperature for 2 hours. A supernatant liquid was removed from the thusobtained product, and the product was washed with 50 ml of heptane three times to give a solid catalyst component (S1).

Preparation of Solid Catalyst Component (T1)

A flask having a volume of 100 ml was charged with a suspension in toluene of 4.2 g of silica having a surface area of 300 $m^2/g$ and an average particle diameter of 57 µm, and 1.3 g of triphenylcarbonium tetrakispentafluorophenylborate,

and the content was stirred overnight at room temperature. A supernatant liquid was removed from the thus-treated product, and the product was washed with 50 ml of heptane three times to give a solid catalyst component (T1). Analysis of the solid catalyst component revealed that it contained 10.8% by weight of carbon atom.

Comparative Example 3

Preparation of Solid Catalyst Component (S2)

The procedure of Comparative Example 2 was repeated wherein 0.3 g of dimethylsilylenezirconium dimethyl was used in stead of 0.30 g of zirconocene dimethyl to give a solid catalyst component (S2). Analysis of the solid catalyst component revealed that it contained 1.7% by weight of zirconium atom.

Production of High-Density Polyethylene by Using Solid Catalyst

Example 15

A 1.5 liter volume autoclave was charged with 4.0 m-mol of triisobutylaluminum (TIBA) and 800 ml of isobutane, and the content was heated to 70°C. A slurry in n-hexane of the entire amount (0.0761 g) of the solid catalyst, prepared in Example 9, was added into the heated content through a catalyst introducer. Then ethylene was supplied at a pressure of 10 $kg/cm^2$ over a period of 30 minutes to conduct polymerization. Thus 120 g of a polymer was obtained. The deposition of polymer on the inner wall of the autoclave was not observed.

Examples 16 to 18

The procedure described in Example 15 was repeated wherein the entire amount of the solid catalyst prepared in each of Examples 10, 12 and 13 with all other conditions remaining the same. The results are shown in Table 2.

Comparative Example 4

The polymerization procedure described in Example 15 was repeated wherein a mixed solution in toluene containing 0.292 mg (1.0 μmol) of zirconocene dichloride, 1.5 m-mol of triisobutylaluminum (TIBA) and 1.202 mg (1.5 μmol) of N,N-dimethylanilinium tetrakispentafluorophenylborate was used instead of the solid catalyst component prepared in Example 9, with all other conditions remaining the same. Thus 100 g of polymer was obtained. It was observed that 20 g of polymer was deposited on the inner wall of the autoclave.

Comparative Example 5

A 1.5 liter volume autoclave was charged with 4.0 m-mol of TIBA and 800 ml of isobutane, and the content was heated to 70°C. A slurry in n-hexane containing 0.2 g of the solid catalyst component (S1) prepared in Comparative Example 2 and 0.2 g of the solid catalyst component (T1) prepared in Comparative Example 2 was added into the heated content through a catalyst introducer. Then ethylene was supplied at a pressure of 10 $kg/cm^2$ over a period of 30 minutes to conduct polymerization. Thus 136 g of a polymer was obtained. It was observed that 0.50 g of polymer was deposited on the inner wall of the autoclave.

Table 2

| Production of Polyethylene | | | | | | |
|---|---|---|---|---|---|---|
| | Examples | | | | Comp. Examples | |
| | 15 | 16 | 17 | 18 | 4 | 5 |
| Production conditions | | | | | | |
| Solid catalyst | *1 | *1 | *1 | *1 | *2 | *3 |
| Kind (Ex. No.) | Ex. 9 | Ex. 10 | EX. 12 | Ex. 13 | - | C.Ex. 2 |
| Amount (g) | 0.0761 | 0.191 | 0.118 | 0.167 | | 0.400 |
| Yield of polymer (g) | 120 | 178 | 135 | 219 | 100 | 136 |
| Catalyst activity (g/g · atm · h) | | | | | | |
| per metallocene | 1,500 | 2,200 | 1,700 | 2,800 | 68,500 | 2,700 |
| per solid catalyst | 315 | 186 | 230 | 262 | - | 68 |
| Deposition of polymer (g) | Not | Not | Not | Not | 20.0 | 0.5 |
| Properties of Polymer | | | | | | |
| Density ($g/cm^3$) | 0.954 | 0.958 | 0.952 | 0.954 | 0.951 | 0.958 |
| Mw (x $10^4$) *4 | 25.6 | 21.9 | 19.8 | 28.0 | 23.0 | 26.9 |
| Mw/Mn *4 | 2.36 | 2.58 | 2.21 | 2.67 | 2.03 | 3.52 |

Note
*1 Amount of $Cp_2ZrCl_2$: 0.0159 g (54.4 μmol)
*2 Amount of $Cp_2ZrCl_2$: 0.000292 g (1.0 μmol)
Amount of $[C_6H_5NHMe_2]$ $[B(C_6H_5)_4]$: 0.00120 g (1.5 μmol)
*3 Amount of solid catalyst component S1: 0.2 g (which contains 0.0099 g of $Cp_2Zr(CH_3)_2$
Amount of solid catalyst component T1: 0.2 g (which contains 0.0386 g of $[(C_6H_5)_3C]$ $[B(C_6H_5)_4]$
*4 Determined by measurement according to gel permeation chromatography

Production of Linear Low-Density Polyethylene

Example 19

A 1.5 liter volume autoclave was charged with 4.0 m-mol of TIBA, 800 ml of isobutane and 15 g of 1-hexene, and the content was heated to 70°C. A slurry in n-hexane containing the entire amount (0.0761 g) of the solid catalyst component, prepared in Example 9, was added into the heated content through a catalyst introducer. Then ethylene was supplied at a pressure of 10 $kg/cm^2$ over a period of 30 minutes to conduct polymerization. Thus 130 g of a polymer was obtained. The deposition of polymer on the inner wall of the autoclave was not observed.

Examples 20 to 22

The procedure described in Example 19 was repeated wherein the entire amount of the solid catalyst prepared in each of Examples 10, 12 and 13 with all other conditions remaining the same. The results are shown in Table 3.

Comparative Example 6

The polymerization procedure described in Example 19 was repeated wherein a mixed solution in toluene containing 0.292 mg (1.0 μmol) of zirconocene dichloride, 1.5 m-mol of triisobutylaluminum (TIBA) and 1.202 mg (1.5 μmol) of N,N-dimethylanilinium tetrakispentafluorophenylborate was used instead of the solid catalyst component used in Example 19, with all other conditions remaining the same. Thus 150 g of polymer was obtained. It was observed that 17 g of polymer was deposited on the inner wall of the autoclave.

Comparative Example 7

A 1.5 liter volume autoclave was charged with 4.0 m-mol of TIBA, 15 g of 1-hexene and 800 ml of isobutane, and the content was heated to 70°C. A slurry in n-hexane containing 0.2 g of the solid catalyst component (S1) prepared in Comparative Example 2 and 0.2 g of the solid catalyst component (T1) prepared in Comparative Example 2 was added into the heated content through a catalyst introducer. Then ethylene was supplied at a pressure of 10 $kg/cm^2$ over a period of 30 minutes to conduct polymerization. Thus 127 g of a polymer was obtained. It was observed that 0.80 g of polymer was deposited on the inner wall of the autoclave.

Table 3

| Production of Linear Low-Density Polyethylene | | | | | | |
|---|---|---|---|---|---|---|
| | Examples | | | | Comp. Examples | |
| | 19 | 20 | 21 | 22 | 6 | 7 |
| Production conditions | | | | | | |
| Solid catalyst | *1 | *1 | *1 | *1 | *2 | *3 |
| Kind (Ex. No.) | Ex. 9 | Ex. 10 | EX. 12 | Ex. 13 | - | C.Ex. 2 |
| Amount (g) | 0.0761 | 0.191 | 0.118 | 0.167 | | 0.400 |
| Yield of polymer (g) | 130 | 163 | 118 | 170 | 150 | 127 |
| Catalyst activity (g/g · atm · h) | | | | | | |
| per metallocene | 1,630 | 2,050 | 1,480 | 2,140 | 102,700 | 2,560 |
| per solid catalyst | 342 | 171 | 200 | 204 | - | 64 |
| Deposition of polymer (g) | Not | Not | Not | Not | 17.0 | 0.8 |
| Properties of Polymer | | | | | | |
| Density ($g/cm^3$) | 0.918 | 0.925 | 0.912 | 0.917 | 0.917 | 0.911 |
| Mw (x $10^4$) *4 | 38.0 | 35.9 | 34.9 | 27.0 | 34.7 | 32.0 |
| Mw/Mn *4 | 2.56 | 2.89 | 3.01 | 2.90 | 2.34 | 3.89 |

Note
*1 Amount of $Cp_2ZrCl_2$: 0.0159 g (54.4 μmol)
*2 Amount of $Cp_2ZrCl_2$: 0.000292 g (1.0 μmol)
Amount of $[C_6H_5NHMe_2]$ $[B(C_6H_5)_4]$: 0.00120 g (1.5 μmol)
*3 Amount of solid catalyst component (S1): 0.2 g (which contains 0.0099 g of $Cp_2Zr(CH_3)_2$
Amount of solid catalyst component (T1): 0.2 g (which contains 0.0386 g of $[(C_6H_5)_3C]$ $[B(C_6H_5)_4]$
*4 Determined by measurement according to gel permeation chromatography

Production of Polypropylene

Example 23

A 1.5 liter volume autoclave was charged with 4.0 m-mol of triisobutylaluminum (TIBA) and 8 mol of propylene, and the content was heated to 50°C. A slurry in n-hexane containing the entire amount (0.0836 g) of the solid catalyst component, prepared in Example 11, was added into the heated content through a catalyst introducer. Polymerization was conducted over a period of 30 minutes. Thus 130 g of a polymer was obtained. The deposition of polymer on the inner wall of the autoclave was not observed.

Example 24

The polymerization procedure described in Example 23 was repeated wherein the entire amount of the solid catalyst prepared in Example 14, with all other conditions remaining the same. The results are shown in Table 4.

Comparative Example 8

The polymerization procedure described in Example 23 was repeated wherein a mixed solution in toluene containing 0.449 mg (1.0 μmol) of dimethylsilylenebisindenylzirconium dichloride, 1.5 m-mol of triisobutylaluminum (TIBA) and 1.202 mg (1.5 μmol) of N,N-dimethylanilinium tetrakispentafluorophenylborate was used instead of the solid catalyst component used in Example 23, with all other conditions remaining the same. Thus 80 g of polymer was obtained. It was observed that 12 g of polymer was deposited on the inner wall of the autoclave.

Comparative Example 9

A 1.5 liter volume autoclave was charged with 4.0 m-mol of TIBA and 8 mol of propylene, and the content was heated to 50°C. A slurry in n-hexane containing 0.2 g of the solid catalyst component (S2) prepared in Comparative Example 3 and 0.2 g of the solid catalyst component (T1) prepared in Comparative Example 2 was added into the heated content through a catalyst introducer. Polymerization was conducted over a period of 30 minutes. Thus 117 g of a polymer was obtained. It was observed that 0.2 g of polymer was deposited on the inner wall of the autoclave.

As seen from the above-mentioned working examples, the catalyst comprising the boron-containing copolymer, prepared by the polymerization of the boron-containing compound with a carbon-carbon double bond of the present invention, and a metalocene compound, exhibits an improved catalytic activity for polymerization of an olefin, and does not cause undesirable deposition of a polymer on the inner wall of a reactor during polymerization.

Table 4

| Production of Polypropylene | | | | |
|---|---|---|---|---|
| | Examples | | Comp. Examples | |
| | 23 | 24 | 8 | 9 |
| Production conditions | | | | |
| Solid catalyst | *1 | *1 | *2 | *3 |
| Kind (Ex.No.) | Ex.11 | Ex.14 | - | C.Ex. 3 |
| Amount (g) | 0.0836 | 0.187 | | 0.400 |
| Yield of polymer (g) | 130 | 178 | 80 | 117 |
| Catalyst activity (g/g.atm.h) | | | | |
| per metallocene | 10,660 | 14,600 | 356,600 | 15,400 |
| per solid catalyst | 3,100 | 1,900 | - | 590 |
| Deposition of polymer (g) | Not | Not | 12.0 | 0.2 |
| Properties of Polymer | | | | |
| Density ($g/cm^3$) | 0.898 | 0.879 | 0.882 | 0.902 |
| Mw (x $10^4$) *4 | 5.9 | 4.9 | 4.3 | 5.0 |
| Mw/Mn *4 | 2.20 | 2.12 | 2.01 | 3.21 |
| Isotactic pentad *5 | 95.6 | 95.7 | 95.2 | 94.8 |

Note
*1 Amount of $Me_2Si[Ind]_2ZrCl_2$: 0.0244 g (54.4 μmol)
*2 Amount of $Me_2Si[Ind]_2ZrCl_2$: 0.00045 g (1.0 μmol)
Amount of $[C_6H_5NHMe_2]$ $[B(C_6H_5)_4]$: 0.00120 g (1.5 μmol)
*3 Amount of solid catalyst component (S2): 0.2 g (which contains 0.0152 g of $Me_2Si[Ind]_2Zr(CH_3)_2$
Amount of solid catalyst component (T1): 0.2 g (which contains 0.0386 g of $[(C_6H_5)_3C]$ $[B(C_6H_5)_4]$
*4 Determined by measurement according to gel permeation chromatography
*5 Determined by calculation from $^{13}C$-NMR

## Claims

1. A boron-containing compound represented by the following formula (1):

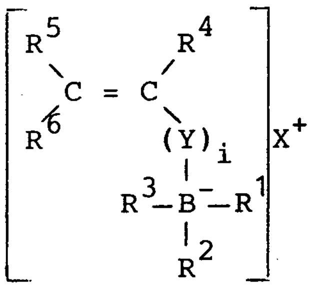

(1)

wherein B represents a boron atom;

C represents a carbon atom;

$R^1$, $R^2$ and $R^3$ independently represent a hydrogen atom; a halogen atom; an alkyl, halogen-containing alkyl or silicon-containing alkyl group having 1 to 20 carbon atoms; an arylalkyl, halogen-containing arylalkyl or a silicon-containing arylalkyl group having 7 to 20 carbon atoms; an aryl, halogen-containing aryl or silicon-containing aryl group having 6 to 20 carbon atoms; or an alkylaryl, halogen-containing alkylaryl or silicon-containing alkylaryl group having 7 to 20 carbon atoms;

$R^4$, $R^5$ and $R^6$ independently represent a hydrogen atom, an alkyl group having 1 to 10 carbon atoms, an arylalkyl group having 7 to 10 carbon atoms, an aryl group having 6 to 10 carbon atoms or an alkylaryl group having 7 to 10 carbon atoms;

Y represents an alkylene or halogen-containing alkylene group having 1 to 10 carbon atoms, an arylalkylene or halogen-containing arylalkylene group having 7 to 10 carbon atoms, an arylene or halogen-containing arylene group having 6 to 10 carbon atoms, an alkylarylene or halogen-containing alkylarylene group having 7 to 10 carbon atoms, or an alkylsilylene group having 1 to 10 carbon atoms;

i is 0 or 1; and

$X^+$ is a cation selected from the group consisting of carbonium, ammonium, ferrocenium, phosphonium, sodium, potassium and lithium cations.

**2.** A boron-containing compound according to claim 1, wherein $R^1$, $R^2$ and $R^3$ represent a pentafluorophenyl group, $R^3$, $R^4$ and $R^5$ represent a hydrogen atom, Y is a phenylene group, and i is 1.

**3.** A boron-containing polymer comprising recurring units represented by the following formula (3):

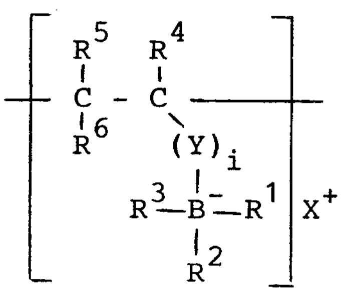

(3)

and optional recurring units represented by the following formula (4):

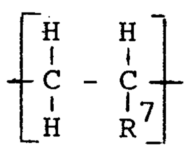

(4)

wherein B, C, $R^1$, $R^2$, $R^3$, $R^4$, $R^5$, $R^6$, Y, $X^+$ and i are as defined in claim 1, and $R^7$ represents a hydrogen atom, a halogen atom, an alkyl group having 1 to 20 carbon atoms, an alkenyl group having 1 to 20 carbon atoms, an aryl or halogen-containing aryl group having 6 to 20 carbon atoms, an alkylaryl group having 7 to 20 carbon atoms, an arylalkenyl group having 8 to 20 carbon atoms, an alkylsilyl group having 1 to 20 carbon atoms, an arylsilyl group having 6 to 20 carbon atoms or an alkoxysilyl group having 1 to 20 carbon atoms;

said polymer being prepared by polymerization of a monomer represented by the following formula (1):

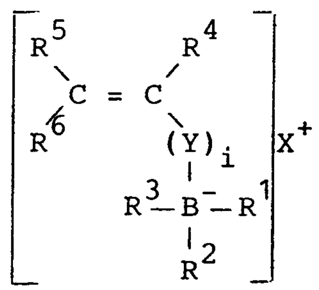

(1)

or by copolymerization of the monomer of formula (1) with a monomer represented by the following formula (2):

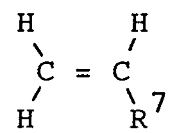

(2)

wherein B, C, $R^1$, $R^2$, $R^3$, $R^4$, $R^5$, $R^6$, Y, $X^+$, $R^7$ and i are as defined above.

**4.** A boron-containing polymer according to claim 3 wherein $R^1$, $R^2$ and $R^3$ represent a pentafluorophenyl group, $R^4$, $R^5$ and $R^6$ represent a hydrogen atom, Y is a phenylene group, i is 1, and $R^7$ is a phenyl group or a pentafluorophenyl group.

**5.** A boron-containing polymer according to claim 3 or 4, which comprises 5 to 100% by mole of recurring units of formula (3) and 95 to 0% by mole of recurring units of formula (4).

**6.** A boron-containing polymer according to any of claims 3 to 5, which has a weight average molecular weight (Mw) of 1,000 to 1000,000 as expressed in terms of polystyrene as measured by gel permeation chromatography.

**7.** A catalyst system for polymerization of an olefin which comprises (a) a boron-containing polymer as claimed in any of claims 3 to 6, and (b) a metallocene compound selected from those which are represented by the following formulae (5) and (6):

$$[(\eta_5\text{-}C_5R^8{}_h)_pR^{10}{}_s(\eta_5\text{-}C_5R^9{}_j)]MeQ_{3-p} \qquad (5)$$

$$[(R^9N)_pR^{10}{}_s(\eta_5\text{-}C_5R^8{}_h)]MeQ'_{3-p} \qquad (6)$$

wherein N is a nitrogen atom,

Me is a transition metal selected from those which are recited in groups 4 and 5 of the periodic table,

$(\eta_5\text{-}C_5R^8{}_h)_p$ and $(\eta_5\text{-}C_5R^9{}_j)$ are a cyclopentadienyl ring or a substituted cyclopentadienyl ring, where h and j are an integer of 2 to 5, and $R^8$s and $R^9$s independently represent a hydrogen atom, an alkyl or alkenyl group having 1 to 20 carbon atoms, an aryl group having 6 to 20 carbon atoms, an alkylaryl or arylalkyl group having 7 to 20 carbon atoms or an alkylsilyl or silylalkyl group having 1 to 20 carbon atoms, or two adjacent $R^8$s or $R^9$s may form a ring together with the two adjacent carbon atoms in the substituted cyclopentadienyl ring,

$R^{10}$ is a binding group selected from the group consisting of an alkylene group having 1 to 4 carbon atoms, a dialkylgermylene group having 1 to 4 carbon atoms in each alkyl group, and an alkylsilylene group having 1 to 4 carbon atoms; said binding group having a function of binding the $(\eta_5\text{-}C_5R^8{}_h)_p$ ring with the $(\eta_5\text{-}C_5R^9{}_j)$ ring in the metallocene compound of formula (5) or binding the $(\eta_5\text{-}C_5R^8{}_h)_p$ ring with the $(R^9N)_p$ in the metallocene compound of formula (6),

Q and Q' are a hydrogen atom, a halogen atom a hydrocarbon group having 1 to 20 carbon atoms,

s is 0 or 1,

p is 0 or 1, provided that, when s is 0, p is 0, and
each of h and j is 4 when s is 1, and 5 when s is 0.

8. A process for producing a polyolefin which comprises polymerizing an olefin having 2 to 20 carbon atoms in the presence of a catalyst system as claimed in claim 7.

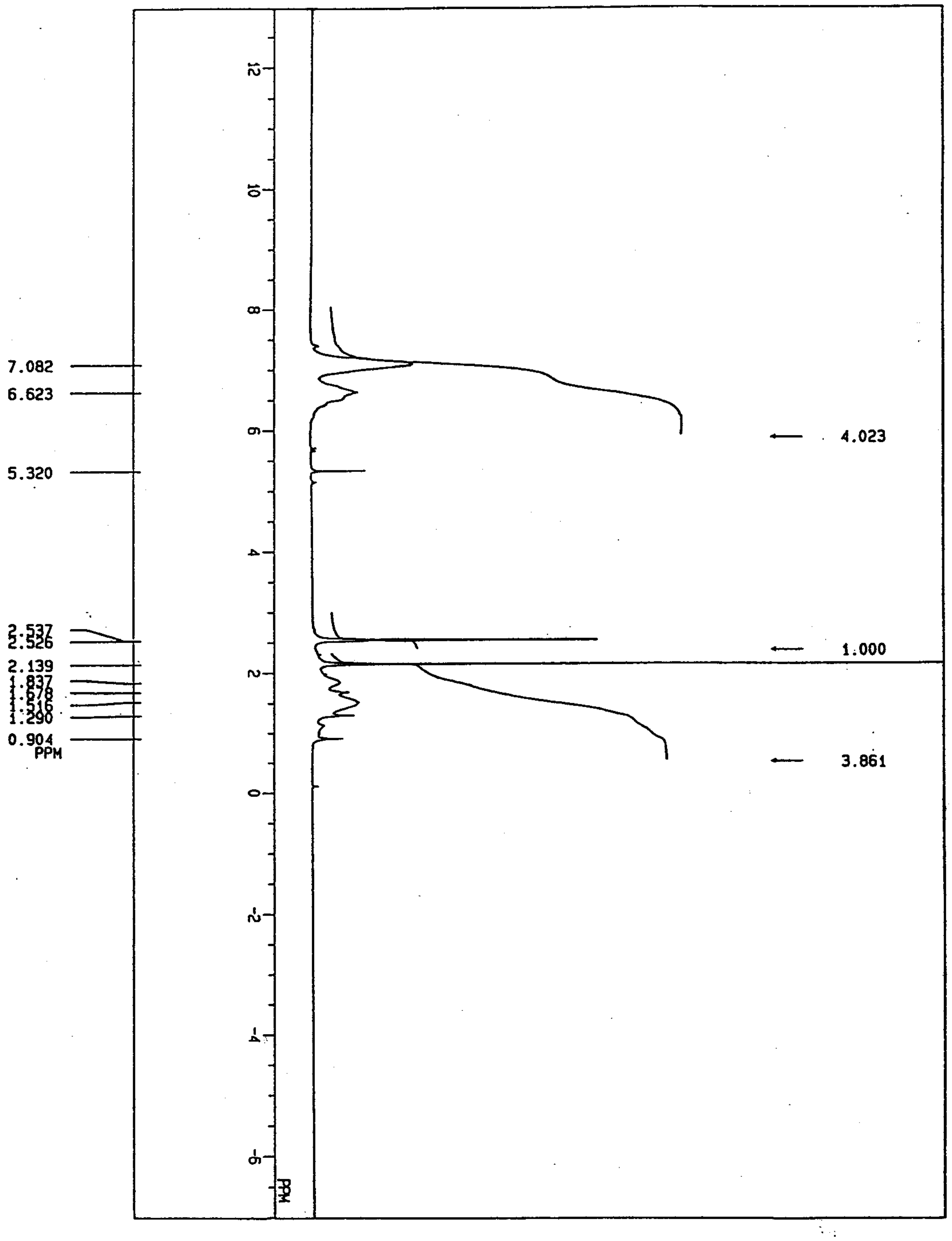
7.082
6.623
5.320
2.537
2.526
2.139
1.837
1.678
1.516
1.290
0.904
PPM
4.023
1.000
3.861
12
10
8
6
4
2
0
-2
-4
-6
PPM

FIG. 1

FIG. 2

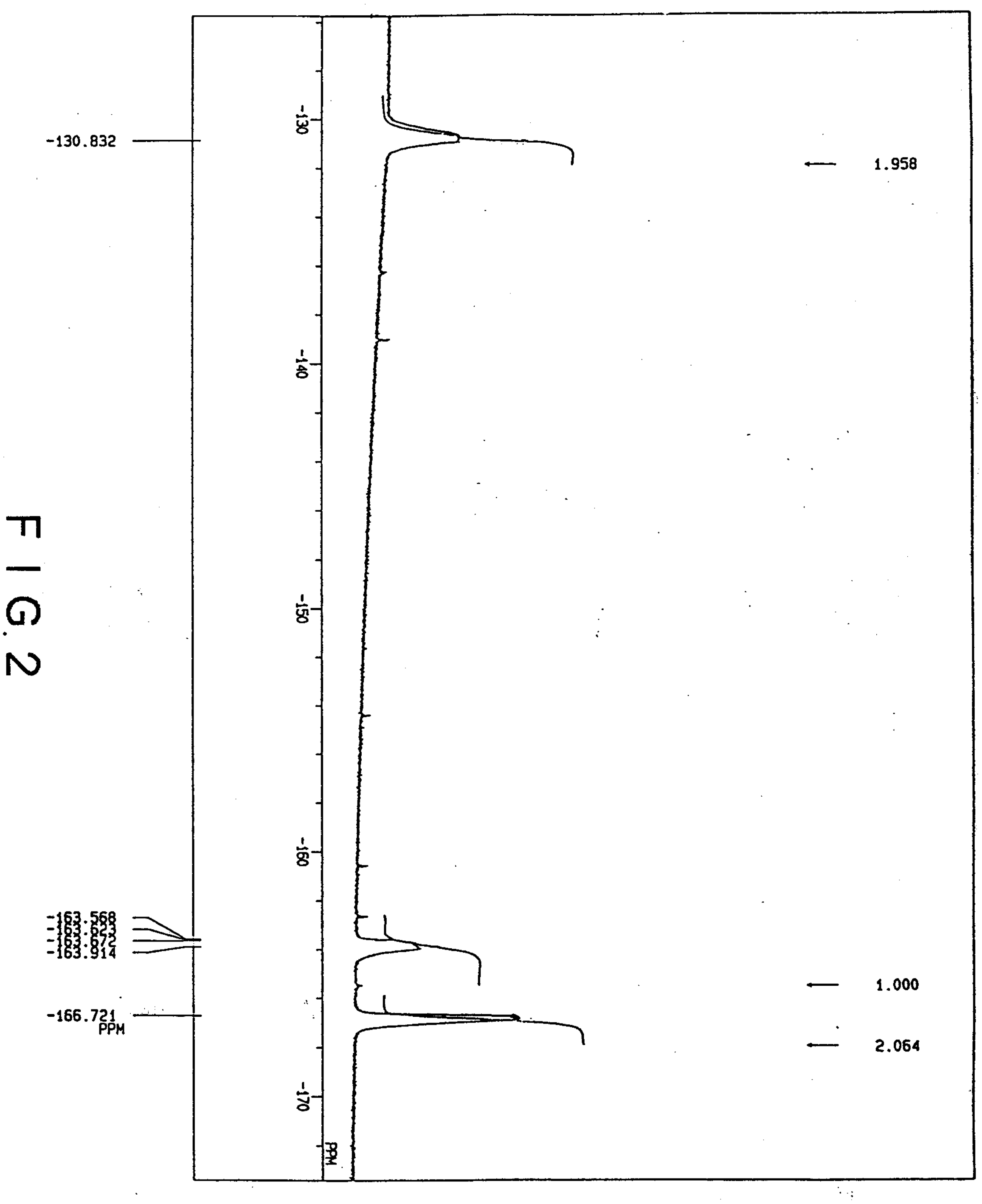
-130.832
-163.568
-163.623
-163.672
-163.914
-166.721
PPM
-130
-140
-150
-160
-170
PPM
1.958
1.000
2.064

FIG. 3

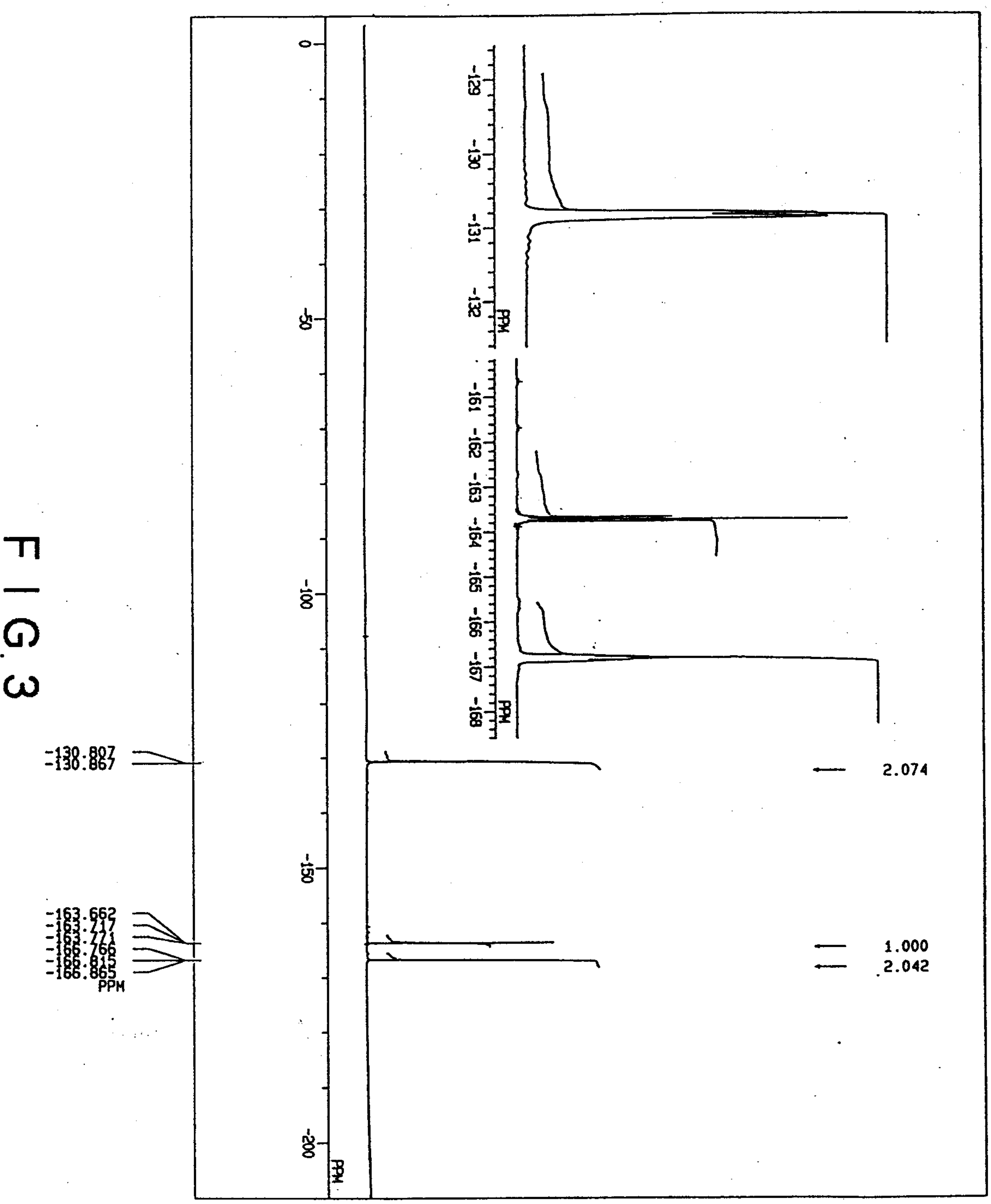
-130.807
-130.867
-163.662
-163.717
-163.771
-166.766
-166.815
-166.865
PPM
2.074
1.000
2.042

FIG. 4

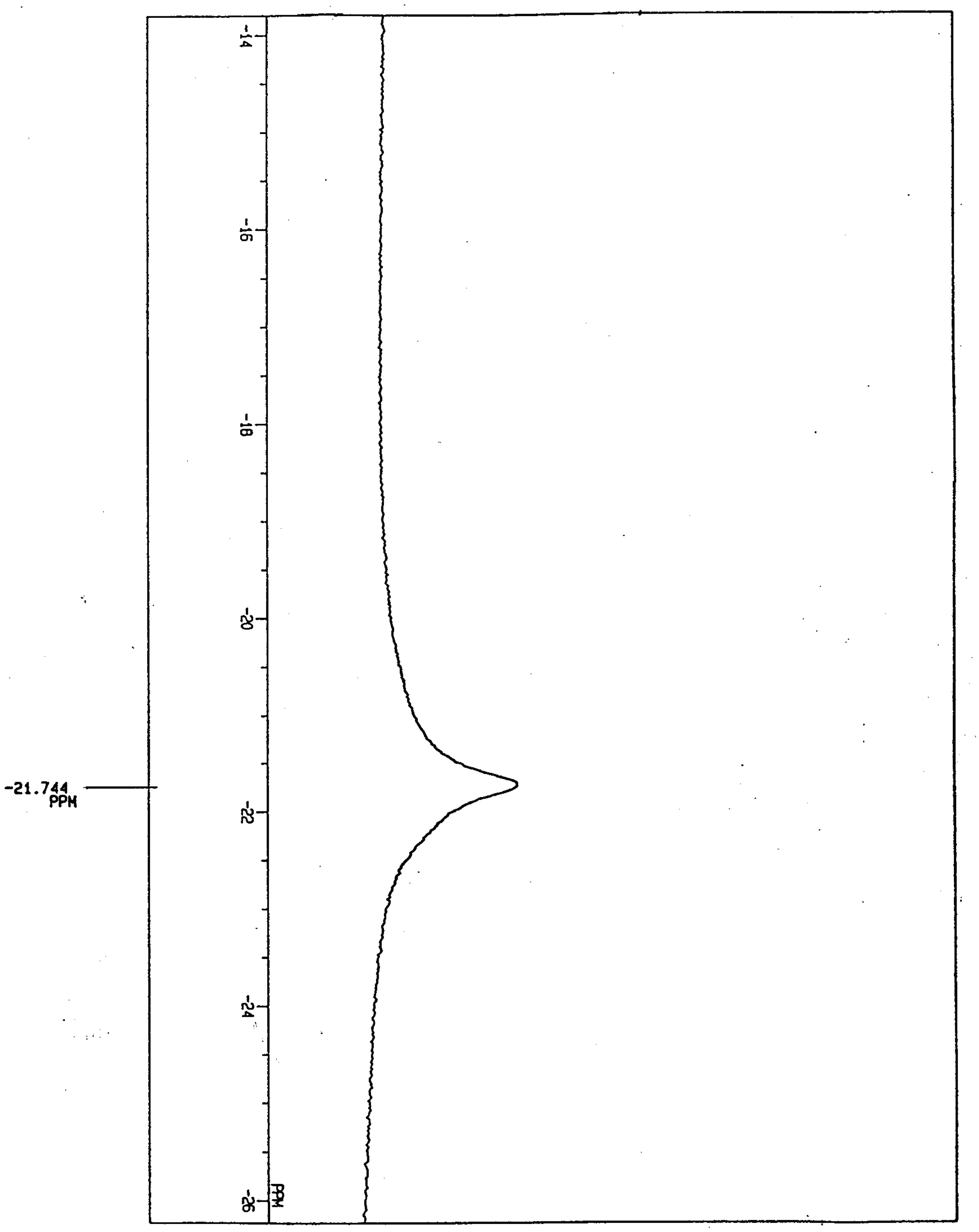

FIG. 5

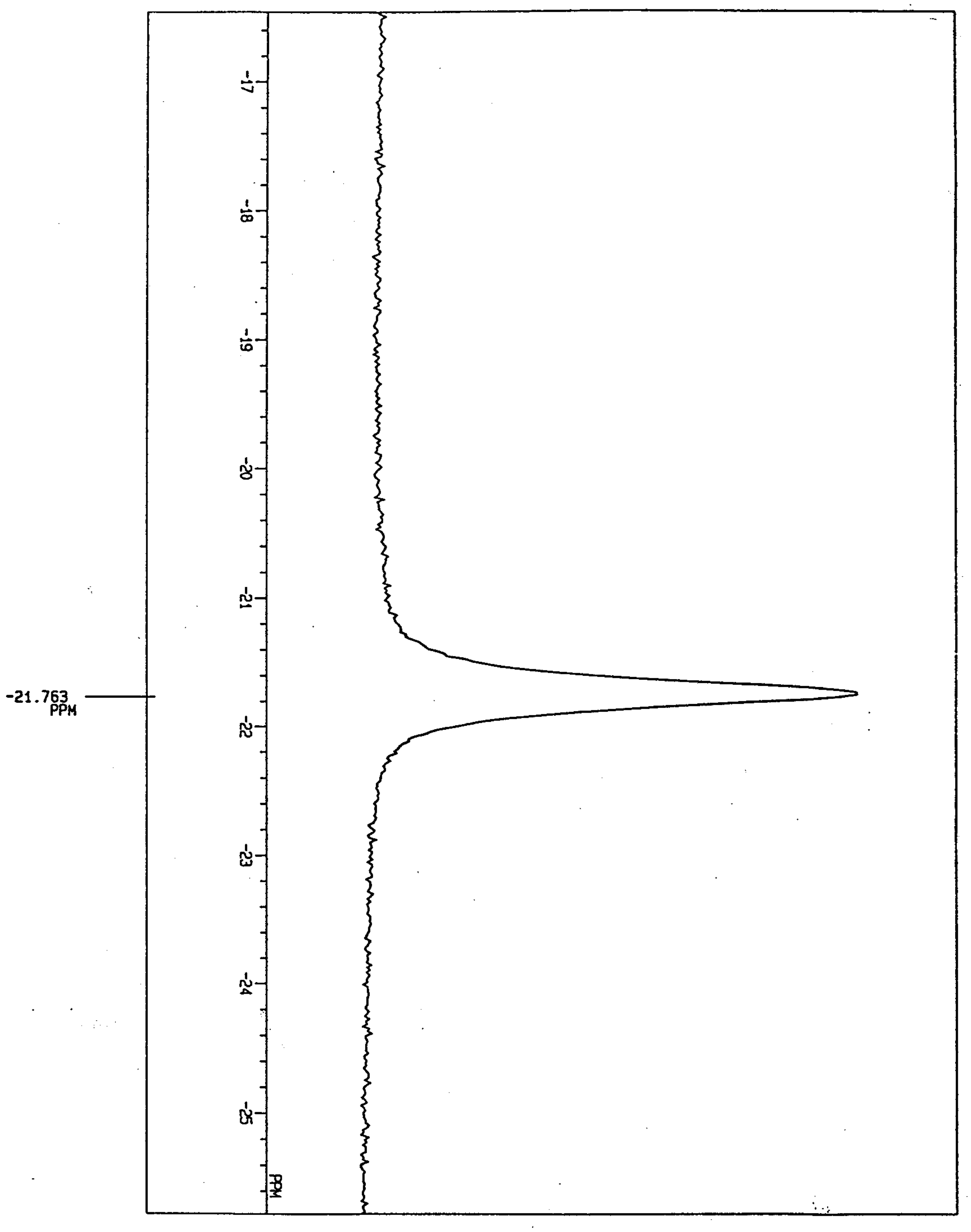

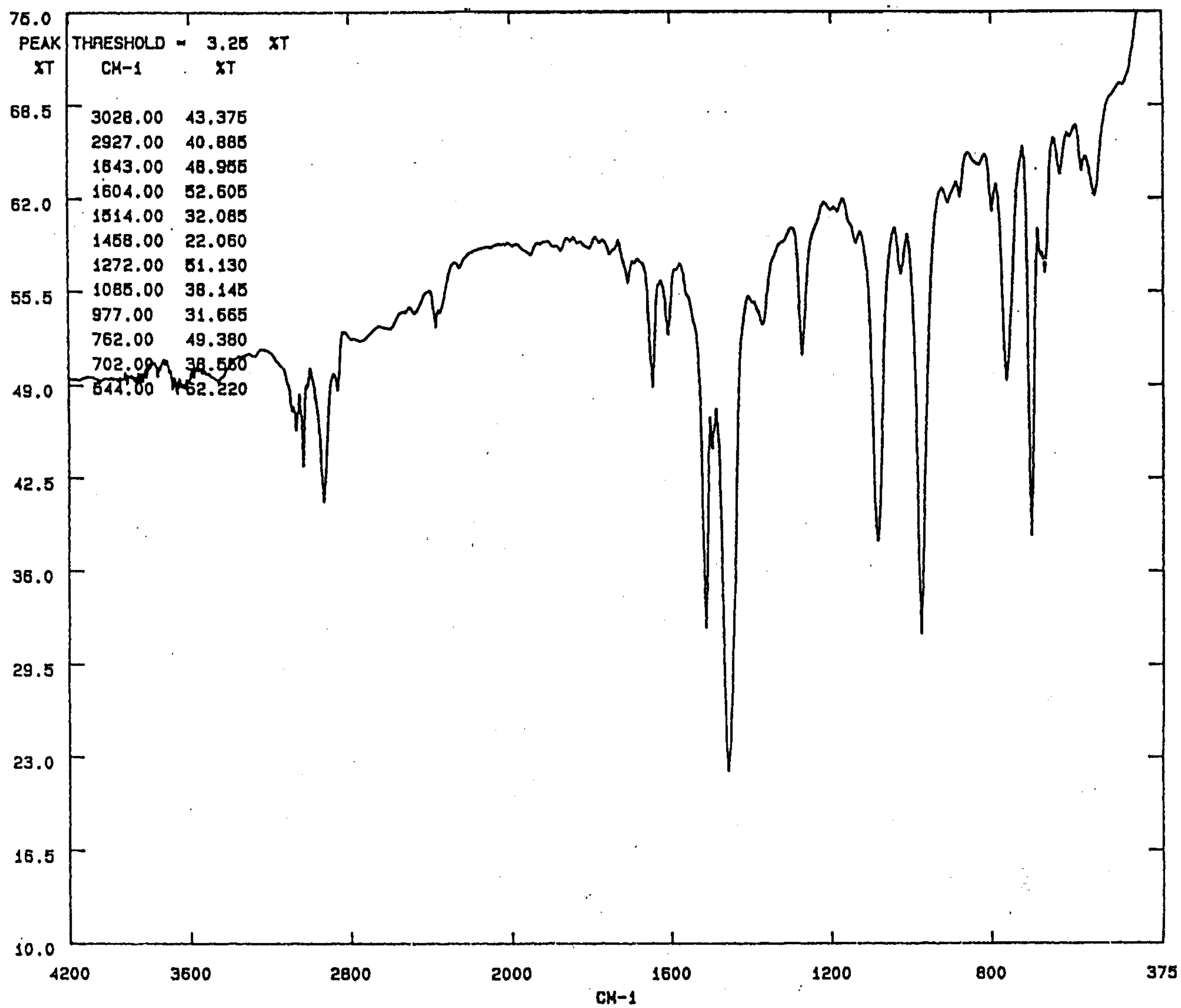
76.0
PEAK THRESHOLD = 3.25 %T
%T CM-1 %T
68.5
62.0
55.5
49.0
42.5
36.0
29.5
23.0
16.5
10.0
3028.00 43.375
2927.00 40.885
1643.00 48.955
1604.00 52.605
1514.00 32.085
1458.00 22.060
1272.00 51.130
1085.00 38.145
977.00 31.665
762.00 49.380
702.00 38.550
544.00 52.220
4200
3600
2800
2000
1600
1200
800
375
CM-1

F I G. 6

European Patent Office

# EUROPEAN SEARCH REPORT

Application Number
EP 95 11 6991

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-93 11172 (EXXON CHEMICAL PATENTS INC.)<br>* the whole document *<br>--- | 1-8 | C07F5/02<br>C07F17/00<br>C08F4/00<br>C08F210/00<br>C08F10/00 |
| X | JUSTUS LIEBIGS ANNALEN DER CHEMIE, vol. 735, 1970<br>pages 189-192,<br>TOCHTERMANN, W. ET AL. 'ZUR STRUKTUR UND HYDROLYSE DES AT-KOMPLEXES AUS TRITYLNATRIUM/TRIPHENYLBORAN UND BUTADIEN'<br>* the whole document *<br>----- | 1 | |

| TECHNICAL FIELDS SEARCHED (Int.Cl.6) |
|---|
| C07F<br>C08F |

The present search report has been drawn up for all claims

| Place of search | Date of completion of the search | Examiner |
|---|---|---|
| THE HAGUE | 16 February 1996 | Rinkel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)